(19) Europäisches Patentamt / European Patent Office / Office européen des brevets

(11) **EP 4 215 874 B1**

(12) **EUROPEAN PATENT SPECIFICATION**

(45) Date of publication and mention
of the grant of the patent:
**20.05.2026 Bulletin 2026/21**

(21) Application number: **20959079.3**

(22) Date of filing: **28.10.2020**

(51) International Patent Classification (IPC):
*G01C 21/20* (2006.01)     *G01C 21/00* (2006.01)
*G01S 7/48* (2006.01)      *G01S 17/42* (2006.01)
*G01S 17/86* (2020.01)     *G01S 17/89* (2020.01)
*G01S 17/931* (2020.01)    *G01S 13/42* (2006.01)
*G01S 13/86* (2006.01)     *G01S 13/931* (2020.01)
*G01S 7/41* (2006.01)

(52) Cooperative Patent Classification (CPC):
**G01S 17/86; G01C 21/206; G01C 21/383;
G01S 7/4802; G01S 7/4817; G01S 13/426;
G01S 13/867; G01S 13/931; G01S 17/42;
G01S 17/89; G01S 17/931;** G01S 7/41

(86) International application number:
**PCT/CN2020/124519**

(87) International publication number:
**WO 2022/087916 (05.05.2022 Gazette 2022/18)**

(54) **POSITIONING METHOD, ELECTRONIC DEVICE AND STORAGE MEDIUM**

POSITIONIERUNGSVERFAHREN SOWIE ELEKTRONISCHE VORRICHTUNG UND SPEICHERMEDIUM

PROCÉDÉ DE POSITIONNEMENT, DISPOSITIF ÉLECTRONIQUE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.07.2023 Bulletin 2023/30**

(73) Proprietor: **Shenzhen Yinwang Intelligent
Technologies Co., Ltd.
Shenzhen, Guangdong 518129 (CN)**

(72) Inventor: **ZHAO, Xiaowen
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 108 917 761     CN-A- 109 709 801
CN-A- 109 785 389     CN-A- 109 974 707
CN-A- 110 223 379     CN-A- 111 583 369

CN-A- 111 627 114     US-A1- 2018 247 122
US-A1- 2018 329 617    US-A1- 2019 340 781

• SPINELLO L ET AL: "Multimodal detection and tracking of pedestrians in urban environments with explicit ground plane extraction", INTELLIGENT ROBOTS AND SYSTEMS, 2008. IROS 2008. IEEE/RSJ INTERNATIONAL CONFERENCE ON, IEEE, PISCATAWAY, NJ, USA, 22 September 2008 (2008-09-22), pages 1823 - 1829, XP032335706, ISBN: 978-1-4244-2057-5, DOI: 10.1109/IROS.2008.4651109
• WANG XI ET AL: "Rigid 3D Point Cloud Registration Based on Point Feature Histograms", 1 January 2017 (2017-01-01), Paris, France, pages 543 - 550, XP093092842, ISBN: 978-94-625-2352-4, Retrieved from the Internet <URL:https://www.atlantis-press.com/article/25879038.pdf> DOI: 10.2991/mecs-17.2017.99

• **YU XIAOQING ET AL: "An improved similarity measure algorithm based on point feature histogram", 2014 INTERNATIONAL CONFERENCE ON AUDIO, LANGUAGE AND IMAGE PROCESSING, IEEE, 7 July 2014 (2014-07-07), pages 396 - 400, XP032719991, ISBN: 978-1-4799-3902-2, [retrieved on 20150113], DOI: 10.1109/ICALIP.2014.7009823**

## Description

### TECHNICAL FIELD

This application relates to the field of intelligent driving technologies, and in particular, to a positioning method and apparatus, an electronic device, and a storage medium.

### BACKGROUND

A positioning technology is a key technology in intelligent driving. Current positioning technologies include a satellite positioning technology, an inertial navigation positioning technology, a visual positioning technology, a lidar positioning technology, and the like. In most cases, the visual positioning technology and the lidar positioning technology are used for indoor positioning.

In current indoor positioning, an indoor point cloud map may be constructed in advance. The point cloud map may include point clouds in a plurality of key frames. When a vehicle moves indoors, a point cloud around the vehicle may be collected in real time. Then, matching is performed between the collected point cloud and point clouds in all key frames of the point cloud map according to an iterative nearest point (iterative closest point, ICP) algorithm; and a pose corresponding to a key frame with a highest matching degree is used as an optimal pose of the vehicle.

However, indoor scenes, for example, scenes at different locations in an underground parking garage are very similar, and therefore point clouds of the different locations are very approximate. As a result, positioning based on ICP matching is not quite accurate.

US 2018/247122 A1 discloses a method and a system of providing information pertaining to an object within a premises. The method includes obtaining images of the premises, processing the images to identify at least one object and its corresponding location within the premises, creating a three-dimensional point cloud of the premises, the identified at least one object being represented by at least one point in the three-dimensional point cloud, storing information pertaining to the identified at least one object, the information pertaining to the identified at least one object including location information of the identified at least one object, receiving a given image captured within the premises, identifying a location and a viewing direction from which the given image was captured, and locating at least one object in the given image, based upon the location and the viewing direction, and the location information.

CN 109 974 707 A discloses an indoor mobile robot visual navigation method based on an improved point cloud matching algorithm. The indoor mobile robot visual navigation method belongs to the field of robot visual navigation. The indoor mobile robot visual navigation method comprises the steps of: S1, calibrating a Kinect camera, and aligning a plurality of point clouds by means of external parameters; S2: acquiring a transformation matrix formed by off-line calibrated external parameters, and calculating a multi-viewpoint transformation matrix; S3, acquiring an ORB feature point of the surrounding environment for performing feature extraction and matching; S4, estimating camera motions between adjacent images to construct a local map, eliminating mismatch by adopting a RANSAC algorithm, andperforming PNP solving on the acquired feature point; S5, introducing a closed-loop detection mechanism to ensure that a robot obtains a trajectory and the map which are globally consistent; S6, andsuppressing cumulative errors of a system by combing with the closed-loop detection mechanism and adopting a camera pose closed-loop constraint point cloud optimization algorithm based on local and global feature points. The indoor mobile robot visual navigation method can reduce the workload of calculation and realize the requirement for real-time performance of the robot.

CN 111 627 114 A discloses an indoor visual navigation method, a device, a system and electronic equipment. The method comprises the steps of uploading the acquired indoor image to be positioned to a server through mobile equipment; determining a camera pose when the mobile device collects an indoor image through the server; issuing the camera pose corresponding to the indoor image to the mobile device; then, establishing an AR coordinate system aligned with the world coordinate system by the mobile device based on the camera pose corresponding to the indoor image; planning a shortest route in a pre-imported indoor topological map based on destination information set by a user; and finally, displaying the current preview image acquired by the mobile device on the interface, and superposing thethree-dimensional identifier for indicating the route travel path direction on the current preview image based on the AR coordinate system and the shortest route. The indoor navigation service can beprovided for the user, and the user is guided to conveniently arrive at the destination.

US 2018/329617 A1 discloses a method of operating a user terminal includes receiving occupancy data for an operating environment responsive to navigation of the operating environment by a mobile robot, and displaying a visual representation of the operating environment based on the occupancy data. The method further includes receiving information identifying a plurality of electronic devices that are local to the operating environment and respective operating states thereof, and populating the visual representation of the operating environment with visual indications of respective spatial locations of the electronic devices in the operating environment and status indications of the respective operating states of the electronic devices. Related methods for controlling the electronic devices based on their respective spatial locations and the relative spatial context of the operating environment are also discussed.

SPINELLO L ET AL: "Multimodal detection and tracking of pedestrians in urban environments with explicit ground plane extraction", INTELLIGENT ROBOTS AND SYSTEMS, 2008. IROS 2008. IEEE/

RSJ INTERNATIONAL CONFERENCE ON, IEEE, PISCATAWAY, NJ, USA, 22 September 2008 (2008-09-22), pages 1823-1829 discloses an pedestrian detection and tracking system for urban environments, utilizing multimodal sensor data. It integrates geometrical features and an Implicit Shape Model with 3D laser data for enhanced accuracy in crowded outdoor spaces, leveraging SVM AdaBoost for robust detection and tracking.

Wang Xi ET AL: "Rigid 3D Point Cloud Registration Based on Point Feature Histograms",Proceedings of the 2017 2nd International Conference on Machinery, Electronics and Control Simulation (MECS 2017), 1 January 2017 (2017-01 -01), pages 543-550 discloses a method for 3D point cloud registration, focusing on improving accuracy and efficiency. By combining Point Feature Histograms for feature extraction with an Iterative Closest Point algorithm, which incorporates dynamic distance thresholds, the method achieves superior alignment accuracy.

YU XIAOQING ET AL: "An improved similarity measure algorithm based on point feature histogram",2014 INTERNATIONAL CONFERENCE ON AUDIO, LANGUAGE AND IMAGE PROCESSING, IEEE, 7 July 2014 (2014-07-07), pages 396-400 discloses point cloud similarity measurement by introducing an algorithm based on Point Feature Histograms in high-dimensional space.

## SUMMARY

Embodiments of this application provide a positioning method and apparatus, an electronic device, and a storage medium, which can improve positioning accuracy by distinguishing between similar scenes.

The invention is defined by the appended set of claims. According to a first aspect, an embodiment of this application provides a positioning method in accordance with claim 1. The method may be applied to a to-be-positioned object. The to-be-positioned object may be a vehicle, a robot, a terminal device, or the like. In the positioning method, the to-be-positioned object may be integrated with an emitting apparatus. The emitting apparatus includes a lidar emitting lasers or a radar emitting millimeter waves around the to-be-positioned object, to collect a current point cloud. It should be understood that, the current point cloud may include a point cloud of the to-be-positioned object and a point cloud of an environment of the to-be-positioned object. The point cloud of the to-be-positioned object is a point cloud obtained after the to-be-positioned object reflects the lasers or millimeter waves emitted by the radar. The point cloud of the environment of the to-be-positioned object is a point cloud obtained after an object in the environment of the to-be-positioned object reflects the lasers or millimeter waves emitted by the radar. In indoor positioning scenes, scenes at many locations are very similar, but attribute features of point clouds in these similar scenes are different. Therefore, in this embodiment of this application, the method may include: extracting an attribute feature of the current point cloud; and then, obtaining a pose of the to-be-positioned object based on the attribute feature of the current point cloud and an attribute feature of a point cloud on a point cloud map of the environment of the to-be-positioned object. Because an attribute feature of a point cloud is an intrinsic feature of the point cloud, even if scenes are similar, attributes or attribute features of point clouds in the similar scenes are different. Therefore, in this embodiment of this application, a method for positioning based on an attribute feature of a point cloud has high positioning accuracy.

The attribute feature of the point cloud according to the invention includes a projection feature of the point cloud and may further include at least one of the following: a normal vector feature of the point cloud, and a curvature feature of the point cloud. The following sequentially describes processes of extracting the projection feature, the normal vector feature, and the curvature feature from the current point cloud.

According to the invention, the attribute feature includes the projection feature of the point cloud, wherein a process of extracting the projection feature from the current point cloud comprises: projecting the current point cloud onto at least one of the following coordinate planes: an xoy plane, a yoz plane, and an xoz plane, to obtain a currently projected point cloud; obtaining a distance between the currently projected point cloud and o; classifying the distance under a preset distance interval; and obtaining the attribute feature of the current point cloud based on quantities of points, in the current point cloud, in all distance intervals, where o is a central location of the to-be-positioned object, and x, y, and z each are a coordinate axis constructed by using o as an origin of coordinates.

In this method, the preset distance interval is related to a farthest distance and a closest distance among points in a point cloud collected by the to-be-positioned object. For example, in this embodiment of this application, an interval formed by the farthest distance and the closest distance among the points in the point cloud collected by the to-be-positioned object may be divided based on the farthest distance and the closest distance, to obtain the preset distance interval. In this embodiment of this application, the method may specifically include: combining the quantities of points, in the current point cloud, in all the distance intervals into a one-dimensional vector; and using the one-dimensional vector as the projection feature of the point cloud.

In a manner of obtaining the projection feature of the current point cloud, the current point cloud may be separately projected onto the xoy plane, the yoz plane, and the xoz plane in this embodiment of this application, to obtain a projection feature that is more detailed than a projection feature obtained by projecting the current point cloud onto one or two coordinate planes. Therefore, positioning accuracy is improved. For example, in this embodiment of this application, the method may include: separately projecting the current point cloud onto the xoy plane, the yoz plane, and the xoz plane, to obtain three currently projected point clouds corresponding to the current point cloud; obtaining a distance between each of the currently projected point clouds of the current point cloud and o, and classifying the distance under a preset distance interval on a corresponding coordinate plane; and obtaining the attribute feature of the current point cloud based on the quantities of points, in the current point cloud, in all the distance intervals on each of the coordinate planes. It should be understood that each of the coordinate planes (the xoy plane, the yoz plane, and the xoz plane) may have a corresponding preset distance interval.

In a second possible implementation, the attribute feature includes the normal vector feature of the point cloud. In this embodiment of this application, a process of extracting the normal vector feature from the current point cloud may be as follows. For ease of description, that all points in the current point cloud are first points is used herein as an example for description. For each first point in the current point cloud, in this embodiment of this application, the method may include: determining a first scan line to which the first point belongs; obtaining one or more first proximal points closest to the first point on two sides of the first point that are on the first scan line; obtaining one or more second proximal points closest to the first point that are on one or more second scan lines, where the second scan lines are adjacent to the first scan line; obtaining a normal vector of the first point based on the first point, the one or more first proximal points, and the one or more second proximal points; and obtaining the attribute feature of the current point cloud based on the normal vector of the first point.

In this embodiment of this application, the method may include: obtaining no or one or more first vectors from the first point to the one or more first proximal points; obtaining one or more second vectors from the first point to the one or more second proximal points; performing cross product calculation between two of the first vectors and the second vectors; and using an average value of all results of the cross product calculation as the normal vector of the first point. The method may specifically include: obtaining a length of a projection of the normal vector of the first point on at least one coordinate axis; classifying the length under a preset length interval; and obtaining the attribute feature of the current point cloud based on quantities of first points in all length intervals.

In this method, the preset length interval is related to a length of a projection of the first point on a coordinate axis. The preset length interval may be preset based on experience. Alternatively, in this embodiment of this application, the length interval may be determined based on a minimum length and a maximum length of the projection of the first point on the coordinate axis. In this embodiment of this application, the method may specifically include: combining the quantities of points, in the current point cloud, in all the length intervals into a one-dimensional vector; and using the one-dimensional vector as the normal vector feature of the point cloud.

In a possible implementation, obtaining a length of a projection of the normal vector of the first point on one coordinate axis in this embodiment of this application may be: obtaining a length of a projection of the normal vector of the first point on the coordinate axis z. In the current point cloud, a height value (corresponding to the axis z) of the point cloud has a more obvious length feature than a length value (corresponding to the axis x and the axis y) on a horizontal plane. Therefore, obtaining, as the length of the projection of the normal vector of the first point on the one coordinate axis, the length of the projection of the normal vector of the first point on the coordinate axis z facilitates ensuring feature matching accuracy and positioning accuracy.

In a third possible implementation, the attribute feature includes the curvature feature of the point cloud. In this embodiment of this application, a process of extracting the curvature feature from the current point cloud may be: For each first point in the current point cloud, the method may include: determining a first scan line to which the first point belongs; obtaining a curvature of the first point based on a location of the first point and locations of points on two sides of the first point that are on the first scan line; classifying the curvature of the first point under a preset curvature interval; and obtaining the attribute feature of the current point cloud based on quantities of first points in all curvature intervals.

Similar to the projection feature and the normal vector feature, in this method, the preset curvature interval is related to the curvature of the first point. The preset curvature interval may be preset based on experience. Alternatively, in this embodiment of this application, the curvature interval may be determined based on a minimum curvature and a maximum curvature of the first point. In this embodiment of this application, the method may specifically include: combining the quantities of points, in the current point cloud, in all the curvature intervals into a one-dimensional vector; and using the one-dimensional vector as the curvature feature of the point cloud.

It should be understood that, in this embodiment of this application, the first manner to the third manner may be used to extract the projection feature, the normal vector feature, and the curvature feature of the current point cloud, so that the attribute feature of the current point cloud is described more accurately and comprehensively, thereby further improving positioning accuracy of the to-be-positioned object.

In a possible implementation, in this embodiment of this application, after the pose of the to-be-positioned object is obtained based on the attribute feature of the current point cloud, the pose of the to-be-positioned object may be further accurately determined with reference to an iterative nearest point (iterative closest point, ICP) algorithm, thereby improving positioning accuracy. The point cloud map may include attribute features of point clouds in a plurality of key frames. In this embodiment of this application, the method may include: obtaining similarities between the attribute feature of the current point cloud and the attribute features of the point clouds in all the key frames; obtaining a preset quantity of highest-ranked key frames as target key frames according to a descending order of the similarities corresponding to all the key frames; using a pose corresponding to each target key frame as a candidate pose; and determining the pose of the to-be-positioned object from a plurality of candidate poses.

In a process of determining the pose of the to-be-positioned object from the plurality of candidate poses, the pose of the to-be-positioned object may be determined with reference to the ICP algorithm. In this embodiment of this application, the method may include: converting the current point cloud into the point cloud map according to conversion relationships that correspond to the candidate poses, to obtain converted point clouds corresponding to the candidate poses; obtaining, from the point cloud map, target point clouds that are closest to the converted point clouds corresponding to the candidate poses; performing iterative closest point ICP matching on the converted point clouds corresponding to the candidate poses and the corresponding target point clouds, to obtain a converted point cloud with a highest matching degree; and obtaining the pose of the to-be-positioned object based on a pose corresponding to the converted point cloud with the highest matching degree and a conversion relationship obtained through the ICP matching.

It should be noted that each candidate pose corresponds to one conversion relationship; and the conversion relationship may convert a point cloud in actual space into a point cloud map. In this embodiment of this application, the obtaining a target point cloud that is closest to the converted point cloud corresponding to each candidate pose means: for the converted point cloud corresponding to each candidate pose, obtaining, from the point cloud map, a point that is closest to each point in the converted point cloud, to form the target point cloud of each candidate pose. After the target point cloud of the converted point cloud corresponding to each pose is obtained, a candidate pose with a highest matching degree may be used as the pose of the to-be-positioned object according to the ICP algorithm.

A point cloud map of the environment of the to-be-positioned object may change at any time. For example, in an underground parking garage, fixed objects such as a pillar, ground, and a lamp remain unchanged, but a vehicle in the underground parking garage may enter and exit at any time. As a result, the point cloud map is affected; and accuracy of matching based on the point cloud map is affected. Therefore, in this embodiment of this application, during construction of a point cloud map, a changeable point cloud (for example, a point cloud of a vehicle in an underground parking garage) may be deleted, so that a point cloud on a point cloud map constructed by using point clouds obtained through the deletion is unchanged. This helps improve positioning accuracy. Correspondingly, a changeable point cloud in the current point cloud may be deleted before the attribute feature of the current point cloud is extracted.

In this embodiment of this application, filtering may be performed on the current point cloud after the current point cloud is obtained. The filtering may simplify a complex point cloud, but retain a feature of the point cloud, to reduce a calculation amount of subsequent processing. After the filtering is performed on the current point cloud, clustering may be performed on the current point cloud, to obtain a point cloud cluster of each object in the environment. The clustering may cluster, into one type, point clouds that belong to a same object in the current point cloud, to form a point cloud cluster of the object. For example, a point cloud cluster that belongs to the ground, a point cloud cluster that belongs to a vehicle, and a point cloud cluster that belongs to a pillar may be obtained in the current point cloud.

In this embodiment of this application, a point cloud cluster whose maximum z value of point clouds is less than a preset value may be deleted from the point cloud clusters of all the objects, that is, a point cloud belonging to a changeable object may be deleted. Then, an attribute feature of a current point cloud obtained after the deletion is extracted. However, because a point cloud cluster whose maximum z value of point clouds in an underground parking garage is less than a preset value may be a point cloud cluster of a static object in the underground parking garage, for example, a point cloud cluster of the ground, and an isolation pier, an anti-collision pier, and the like on the ground. If point cloud clusters of these objects are deleted, a lot of information may be missing. Therefore, in this embodiment of this application, a static object in the underground parking garage may be used as a preset object; and the point cloud cluster whose maximum z value of point clouds is less than the preset value is deleted from the point cloud clusters of all the objects except the preset object. For example, the point cloud cluster whose maximum z value of point clouds is less than the preset value is deleted from the point cloud clusters of all the objects except the ground, and the isolation pier, the anti-collision pier, and the like on the ground. In this way, a detailed and complete point cloud of the underground parking garage can be retained, thereby improving accuracy of the point cloud map.

A positioning process based on a match between the attribute feature of the point cloud corresponding to each key frame of the point cloud map and the attribute feature of the current point cloud is described in the foregoing embodiment. A process of constructing the point cloud map in this embodiment of this application is described herein.

It should be understood that, in this embodiment of this application, an execution body for constructing the point cloud map may be the same as or different from an execution body for performing the foregoing positioning method. When the execution body for constructing the point cloud map is different from the execution body for performing the foregoing positioning method, the to-be-positioned object may obtain the point cloud map in advance. The following uses the to-be-positioned object as an example to describe the process of constructing the point cloud map. In this embodiment of this application, the method may include: collecting, by the to-be-positioned object in a process of moving in the environment, point clouds corresponding to all poses of the to-be-positioned object; extracting attribute features of the point clouds corresponding to all the poses; and storing the attribute features of the point clouds corresponding to all the poses and the poses in correspondence with each other, to construct the point cloud map. It should be understood that, in the process of constructing the point cloud map, a manner of extracting the attribute feature of the point cloud corresponding to each pose by the to-be-positioned object may be the same as the foregoing manner of extracting the attribute feature of the current point cloud by the to-be-positioned object.

The method may include: collecting, by the to-be-positioned object, a point cloud in one key frame at each preset distance in the process of moving in the environment; and obtaining a pose by which the to-be-positioned object collects the point cloud in the one key frame, to obtain the point cloud corresponding to each pose. Then, mapping is performed between the pose and the point cloud that correspond to each key frame, to obtain the point cloud map.

In a possible implementation, for the point cloud corresponding to each pose, in this embodiment of this application, after the point cloud corresponding to each pose is obtained, filtering may be performed on the point cloud corresponding to each pose. The filtering may simplify a complex point cloud, but retain a feature of the point cloud, to reduce a calculation amount of subsequent processing. After the filtering is performed on the point cloud corresponding to each pose, clustering may be performed on the point cloud corresponding to each pose, to obtain a point cloud cluster of each object in the environment. Similar to the foregoing processing manner of the current point cloud, in this embodiment of this application, the method may include: deleting, from the point cloud clusters of all the objects except the preset object, a point cloud cluster whose maximum z value of point clouds is less than a preset value; and extracting an attribute feature of the point cloud that corresponds to each pose and that is obtained through the deletion. Then, a point cloud that is complete but does not include any changeable object is obtained, to improve positioning accuracy.

According to a second aspect, an example not falling under the scope of the claims provides a positioning apparatus. The positioning apparatus is the to-be-positioned object in the first aspect. The positioning apparatus includes:

> a first processing module, configured to collect a current point cloud, where the current point cloud includes a point cloud of a to-be-positioned object and a point cloud of an environment of the to-be-positioned object; and
> a second processing module, configured to: extract an attribute feature of the current point cloud, and obtain a pose of the to-be-positioned object based on the attribute feature of the current point cloud and an attribute feature of a point cloud on a point cloud map of the environment of the to-be-positioned object.

In a possible implementation, the attribute feature includes at least one of the following: a projection feature of the point cloud, a normal vector feature of the point cloud, and a curvature feature of the point cloud.

In a possible implementation, the attribute feature includes the projection feature of the point cloud; and the second processing module is specifically configured to: project the current point cloud onto at least one of the following coordinate planes: an xoy plane, a yoz plane, and an xoz plane, to obtain a currently projected point cloud, where o is a central location of the to-be-positioned object, and x, y, and z each are a coordinate axis constructed by using o as an origin of coordinates; obtain a distance between the currently projected point cloud and o; classify the distance under a preset distance interval; and obtain the attribute feature of the current point cloud based on quantities of points, in the current point cloud, in all distance intervals.

In a possible implementation, the second processing module is specifically configured to: separately project the current point cloud onto the xoy plane, the yoz plane, and the xoz plane, to obtain three currently projected point clouds corresponding to the current point cloud; obtain a distance between each of the currently projected point clouds of the current point cloud and o; classify the distance under a preset distance interval on a corresponding coordinate plane; and obtain the attribute feature of the current point cloud based on the quantities of points, in the current point cloud, in all the distance intervals on each of the coordinate planes.

In a possible implementation, the preset distance interval is related to a farthest distance and a closest distance among points in a point cloud collected by the to-be-positioned object.

In a possible implementation, the attribute feature includes the normal vector feature of the point cloud; all points in the current point cloud are first points; and for each first point in the current point cloud, the second processing module is specifically configured to: determine a first scan line to which the first point belongs; obtain one or more first proximal points closest to the first point on two sides of the first point that are on the first scan line; obtain one or more second proximal points closest to the first point that are on one or more second scan lines, where the second scan lines are adjacent to the first scan line; obtain a normal vector of the first point based on the first point, the one or more first proximal points, and the one or more second proximal points; and obtain the attribute feature of the current point cloud based on the normal vector of the first point.

In a possible implementation, the second processing module is specifically configured to: obtain no or one or more first vectors from the first point to the one or more first proximal points; obtain one or more second vectors from the first point to the one or more second proximal points; perform cross product calculation between two of the first vectors and the second vectors; and use an average value of all results of the cross product calculation as the normal vector of the first point.

In a possible implementation, the second processing module is specifically configured to: obtain a length of a projection of the normal vector of the first point on at least one coordinate axis; classify the length under a preset length interval; and obtain the attribute feature of the current point cloud based on quantities of first points in all length intervals.

In a possible implementation, the second processing module is specifically configured to: obtain the length of the projection of the normal vector of the first point on the coordinate axis z.

In a possible implementation, the attribute feature includes the curvature feature of the point cloud; all the points in the current point cloud are the first points; for each first point in the current point cloud, the second processing module is specifically configured to: determine a first scan line to which the first point belongs; obtain a curvature of the first point based on a location of the first point and locations of points on two sides of the first point that are on the first scan line; classify the curvature of the first point under a preset curvature interval; and obtain the attribute feature of the current point cloud based on quantities of first points in all curvature intervals.

In a possible implementation, the point cloud map includes attribute features of point clouds in a plurality of key frames; and the second processing module is specifically configured to: obtain similarities between the attribute feature of the current point cloud and the attribute features of the point clouds in all the key frames; obtain a preset quantity of highest-ranked key frames as target key frames according to a descending order of the similarities corresponding to all the key frames; use a pose corresponding to each target key frame as a candidate pose; and determine the pose of the to-be-positioned object from a plurality of candidate poses.

In a possible implementation, the second processing module is specifically configured to: convert the current point cloud into the point cloud map according to conversion relationships that correspond to the candidate poses, to obtain converted point clouds corresponding to the candidate poses; obtain, from the point cloud map, target point clouds that are closest to the converted point clouds corresponding to the candidate poses; perform iterative closest point ICP matching on the converted point clouds corresponding to the candidate poses and the corresponding target point clouds, to obtain a converted point cloud with a highest matching degree; and obtain the pose of the to-be-positioned object based on a pose corresponding to the converted point cloud with the highest matching degree and a conversion relationship obtained through the ICP matching.

In a possible implementation, the second processing module is further configured to: perform clustering for the current point cloud, to obtain a point cloud cluster of each object in the environment; delete, from the point cloud clusters of all the objects except the preset object, a point cloud cluster whose maximum z value of point clouds is less than a preset value; and extract the attribute feature of the current point cloud obtained through the deletion.

In a possible implementation, in a process in which the to-be-positioned object moves in the environment, a point cloud map construction module is configured to: collect point clouds corresponding to all poses of the to-be-positioned object; extract attribute features of the point clouds corresponding to all the poses; and store the attribute features of the point clouds corresponding to all the poses and the poses in correspondence with each other, to construct the point cloud map.

In a possible implementation, in a process in which the to-be-positioned object moves in the environment, a point cloud map construction module is configured to: collect a point cloud in one key frame at each preset distance; and obtain a pose by which the to-be-positioned object collects the point cloud in the one key frame, to obtain the point cloud corresponding to each pose.

In a possible implementation, the second processing module is further configured to: perform clustering for the point cloud corresponding to each pose, to obtain a point cloud cluster of each object in the environment; delete, from the point cloud clusters of all the objects except the preset object, a point cloud cluster whose maximum z value of point clouds is less than a preset value; and extract an attribute feature of the point cloud that corresponds to each pose and that is obtained through the deletion.

According to a third aspect, an embodiment of this application provides an electronic device in accordance with claim 11. The electronic device includes a processor, a memory, and a point cloud collection apparatus.

The point cloud collection apparatus includes a radar emitting lasers or millimeter waves, to collect a current point cloud, where the current point cloud includes a point cloud of a to-be-positioned object and a point cloud of an environment of the to-be-positioned object.

The memory is configured to store computer-executable program code. The program code includes instructions. When the processor executes the instructions, the instructions enable the electronic device to perform the method according to the first aspect or the possible implementations of the first aspect.

According to a fourth aspect, an example not falling under the scope of the claims provides a positioning apparatus, including a unit, a module, or a circuit that is configured to perform the method according to the first aspect or the possible implementations of the first aspect. The positioning apparatus may be a to-be-positioned object, or may be a module used in the to-be-positioned object, for example, may be a chip used in the to-be-positioned object.

According to a fifth aspect, an embodiment of this application provides a computer program product including instructions in accordance with claim 12. When the computer program product is run on a computer, the computer is enabled to perform the method according to any one of the first aspect or the possible implementations of the first aspect.

Disclosures in this application provide a positioning method and apparatus, an electronic device, and a storage medium. Because an attribute feature of a point cloud is an intrinsic feature of the point cloud, even if scenes are similar, attributes or attribute features of point clouds in the similar scenes are different. Therefore, the positioning method in the embodiments of this application can match an attribute feature of a current point cloud around a to-be-positioned object and an attribute feature of a point cloud on a point cloud map to distinguish between similar scenes, thereby improving indoor positioning accuracy.

## BRIEF DESCRIPTION OF DRAWINGS

FIG. 1 is a schematic flowchart of an existing indoor positioning method;
FIG. 2 is a schematic flowchart of another existing indoor positioning method;
FIG. 3 is a schematic flowchart of an embodiment of a positioning method according to an embodiment of this application;
FIG. 4 is a schematic flowchart of another embodiment of a positioning method according to an embodiment of this application;
FIG. 5 is a schematic diagram of projecting a current point cloud onto an xoy plane according to an embodiment of this application;
FIG. 6 is a schematic flowchart of still another embodiment of a positioning method according to an embodiment of this application;
FIG. 7 is a schematic diagram of points on a scan line according to an embodiment of this application;
FIG. 8 is a schematic flowchart of yet another embodiment of a positioning method according to an embodiment of this application;
FIG. 9 is a schematic diagram of a first point and points on two sides of the first point according to an embodiment of this application;
FIG. 10 is a schematic flowchart of still yet another embodiment of a positioning method according to an embodiment of this application;
FIG. 11 is a schematic flowchart of an embodiment of constructing a point cloud map according to an embodiment of this application;
FIG. 12 is a schematic flowchart of another embodiment of constructing a point cloud map according to an embodiment of this application;
FIG. 13 is a schematic diagram of obtaining an angle between projected points according to an embodiment of this application;
FIG. 14 is a schematic flowchart of a further embodiment of a positioning method according to an embodiment of this application;
FIG. 15 is a schematic diagram of a structure of a positioning apparatus according to an embodiment of this application; and
FIG. 16 is a schematic diagram of a structure of an electronic device according to an embodiment of this application.

## DESCRIPTION OF EMBODIMENTS

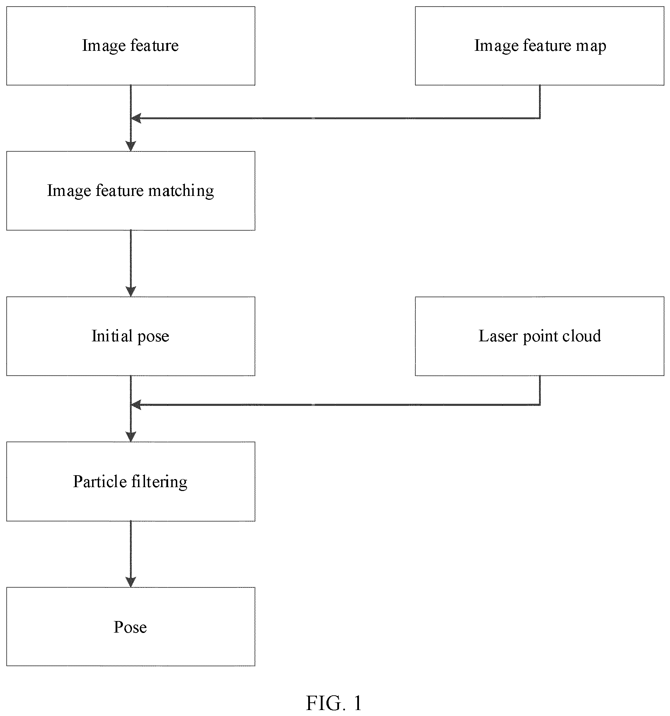

FIG. 1 is a schematic flowchart of an existing indoor positioning method. A vehicle may be provided with a camera and a lidar. In a process in which a vehicle moves indoors, the camera may collect images around the vehicle; and the lidar may emit lasers around the vehicle, to collect a point cloud around the vehicle. An indoor image feature map may be pre-stored in the vehicle. The image feature map includes an image feature corresponding to each pose of the vehicle. During positioning, as shown in FIG. 1, the vehicle may match an image feature in a collected image and an image feature that corresponds to each pose and that is in the map, to determine an initial pose. For example, a pose corresponding to an image feature that is in the map and that has a highest matching degree may be used as the initial pose. The vehicle may further determine a pose of the vehicle based on a point cloud around the initial pose in a particle filtering manner. The method shown in FIG. 1 makes full use of abundant features in an image, and can accurately position a vehicle in an indoor environment with reference to a point cloud. However, when illumination is relatively weak, a feature in an image is easy to lose or difficult to obtain. Particularly, in an environment of an underground parking garage, different locations have different illumination, which also affects extraction of an image feature, leading to positioning failure and insufficient robustness of the indoor positioning method.

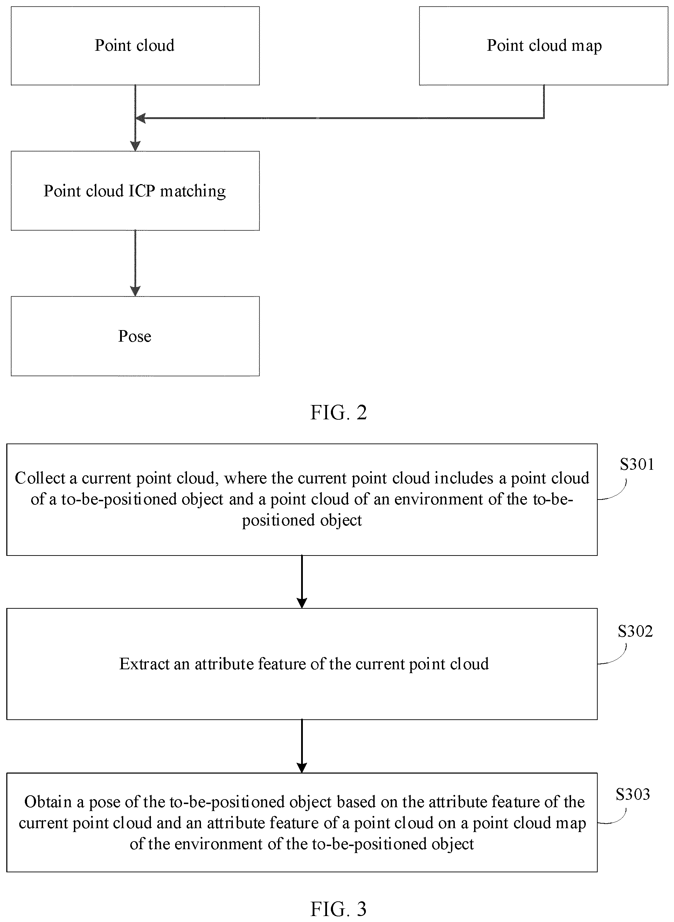

FIG. 2 is a schematic flowchart of another existing indoor positioning method. To resolve a problem that positioning based on an image feature is affected by light, an indoor positioning method is further provided at present. In this method, positioning may be performed based on a point cloud around a vehicle. The vehicle may pre-store a point cloud map. The point cloud map may include a point cloud corresponding to each pose of the vehicle. In a process in which the vehicle moves indoors, a point cloud around the vehicle may be collected. Then, matching is performed between the collected point cloud and point clouds corresponding to all poses in the point cloud map according to an iterative nearest point (iterative closest point, ICP) algorithm; and a pose with a highest matching degree is used as an optimal pose of the vehicle. In this method, impact of external light is avoided. However, because scenes of locations in an indoor environment (for example, an underground parking garage) are very similar, point clouds at the locations are very approximate, and a pose with a highest matching degree may be another location with a similar scene. Therefore, accuracy of the indoor positioning method is low.

To resolve a problem in the existing indoor positioning method, an embodiment of this application provides a positioning method. In the positioning method, positioning may be performed by matching for an attribute feature of a point cloud. Because an attribute feature of a point cloud is an intrinsic feature of the point cloud, even if scenes are similar, attributes or attribute features of point clouds in the scenes are different. Therefore, a scene with a high similarity can be identified based on matching for the attribute feature of the point cloud, thereby improving accuracy of indoor positioning.

It should be understood that the positioning method in this embodiment of this application may be applied to a positioning scene of an electronic device like a vehicle or a robot, and may alternatively be applied to a scene in which another electronic device can obtain a point cloud by emitting lasers and perform positioning by using the point cloud. In this embodiment of this application, the positioning method may be performed by a positioning apparatus. The positioning apparatus may be a vehicle, a processing chip in a vehicle, a robot, a chip in a robot, a terminal device, or the like. It should be understood that an emitting apparatus may be integrated into or independently disposed in the positioning apparatus. The emitting apparatus may emit lasers around the positioning apparatus, to collect a point cloud around the positioning apparatus. The emitting apparatus in this embodiment of this application may be, but is not limited to, a lidar, a millimeter-wave radar, and the like. The following embodiments are described by using an example in which the positioning apparatus is a robot and the emitting apparatus is a lidar.

The positioning method provided in embodiments of this application is described in detail below with reference to specific embodiments. The following several specific embodiments may be combined with each other, and a same or similar concept or process may not be described repeatedly in some embodiments. FIG. 3 is a schematic flowchart of an embodiment of a positioning method according to an embodiment of this application. As shown in FIG. 3, the positioning method provided in this embodiment of this application may include the following steps:

S301: Collect a current point cloud, where the current point cloud includes a point cloud of a to-be-positioned object and a point cloud of an environment of the to-be-positioned object.
S302: Extract an attribute feature of the current point cloud.
S303: Obtain a pose of the to-be-positioned object based on the attribute feature of the current point cloud and an attribute feature of a point cloud on a point cloud map of the environment of the to-be-positioned object.

In S301, the lidar may emit lasers around the to-be-positioned object, so that the to-be-positioned object can obtain information reflected by the lasers, thereby collecting the current point cloud. It should be understood that, the current point cloud may include the point cloud of the to-be-positioned object and the point cloud of the environment of the to-be-positioned object. The point cloud of the to-be-positioned object is a point cloud obtained after the to-be-positioned object reflects the lasers or millimeter waves emitted by the radar. The point cloud of the environment of the to-be-positioned object is a point cloud obtained after an object in the environment of the to-be-positioned object reflects the lasers or millimeter waves emitted by the radar. In this embodiment of this application, a process in which the to-be-positioned object controls the lidar to obtain the point cloud is not described in detail. For details, refer to a current technical solution. The to-be-positioned object may be a vehicle, a robot, a terminal device, or the like.

For example, if the to-be-positioned object is a robot, a point cloud obtained by the robot at an indoor location A may be the current point cloud. The current point cloud may include a plurality of points (for example, laser points, referred to as points below) and information about each point. The point is a point at which an emitted laser is reflected when meeting an obstacle, and information about the point may be three-dimensional spatial coordinates, laser reflection intensity, or the like of the point. In this embodiment of this application, a point cloud obtained by the robot in real time may be used as the current point cloud, so that the robot is positioned based on the current point cloud at each moment.

In S302, in this embodiment of this application, an attribute of the current point cloud may be a set of attributes of a plurality of points included in the current point cloud. An attribute of each point may be three-dimensional spatial coordinates of the point, laser reflection intensity, a distance between the point and the to-be-positioned object, a distance between the point and a surrounding point, a normal vector of a line segment formed by the point and the surrounding point, and the like. It should be understood that the attribute of each point is an intrinsic attribute of the point. Therefore, the attribute of the current point cloud is also an intrinsic attribute of the current point cloud.

In this embodiment of this application, the attribute feature of the current point cloud may be extracted based on the attribute of the current point cloud; and the attribute feature of the current point cloud is used to represent the attribute of the current point cloud. Optionally, in a possible implementation, the attribute feature of the current point cloud may be a one-dimensional vector corresponding to a normal vector of a line segment formed by a point in the current point cloud and a surrounding point. Optionally, in a possible implementation, the attribute feature of the current point cloud may be a one-dimensional vector including a distance between the point and the to-be-positioned object.

In S303, a point cloud map of the environment of the to-be-positioned object may be pre-stored in the to-be-positioned object. For example, if the to-be-positioned object is a vehicle, and an environment of the vehicle is an underground parking lot, the point cloud map is a point cloud map of the underground parking lot. Optionally, the vehicle may obtain the point cloud map of the underground parking lot when entering the underground parking lot. For example, the vehicle accesses a server corresponding to the underground parking lot, and downloads the point cloud map of the underground parking lot from the server. For example, if the to-be-positioned object is a robot, the robot is an indoor defense guard (used to obtain indoor information by moving indoors), and an environment of the robot is a shopping mall, the point cloud map may be a point cloud map of the shopping mall. Optionally, the staff member may pre-store the point cloud map of the shopping mall in the robot, or the robot may collect the point cloud of the shopping mall by itself, so as to generate the point cloud map of the shopping mall. A manner in which the to-be-positioned object obtains the point cloud map of the environment of the to-be-positioned object is not limited in this embodiment of this application.

It should be understood that the point cloud map may include an attribute feature of a point cloud corresponding to each pose. Each pose may be a pose, in the environment of the to-be-positioned object, of a device that generates the point cloud map. The device that generates the point cloud map may be the to-be-positioned object or another device. In other words, the point cloud map may include a plurality of poses and attribute features of point clouds corresponding to the poses.

In this embodiment of this application, the to-be-positioned object may obtain a pose of the to-be-positioned object based on the attribute feature of the current point cloud and an attribute feature of a point cloud on the point cloud map of the environment of the to-be-positioned object. The to-be-positioned object may match the attribute feature of the current point cloud and the attribute feature of the point cloud corresponding to each pose on the point cloud map of the environment of the to-be-positioned object, and use a pose corresponding to an attribute feature of a point cloud with a highest matching degree as the pose of the to-be-positioned object. For example, the to-be-positioned device may obtain a Euclidean distance (or another distance representing a similarity of an attribute feature) between the attribute feature of the current point cloud and the attribute feature of the point cloud corresponding to each pose on the point cloud map, and use a pose corresponding to an attribute feature of a point cloud with a minimum Euclidean distance as the pose of the to-be-positioned object.

The positioning method provided in this embodiment of this application includes: collecting a current point cloud, where the current point cloud may include a point cloud of a to-be-positioned object and a point cloud of an environment of the to-be-positioned object; extracting an attribute feature of the current point cloud; and obtaining a pose of the to-be-positioned object based on the attribute feature of the current point cloud and an attribute feature of a point cloud on a point cloud map of the environment of the to-be-positioned object. Because an attribute feature of a point cloud is an intrinsic feature of the point cloud. even if scenes are similar, attributes or attribute features of point clouds in the similar scenes are different. Therefore, the positioning method in this embodiment of this application can match an attribute feature of a current point cloud around a to-be-positioned object and an attribute feature of a point cloud on a point cloud map to improve indoor positioning accuracy.

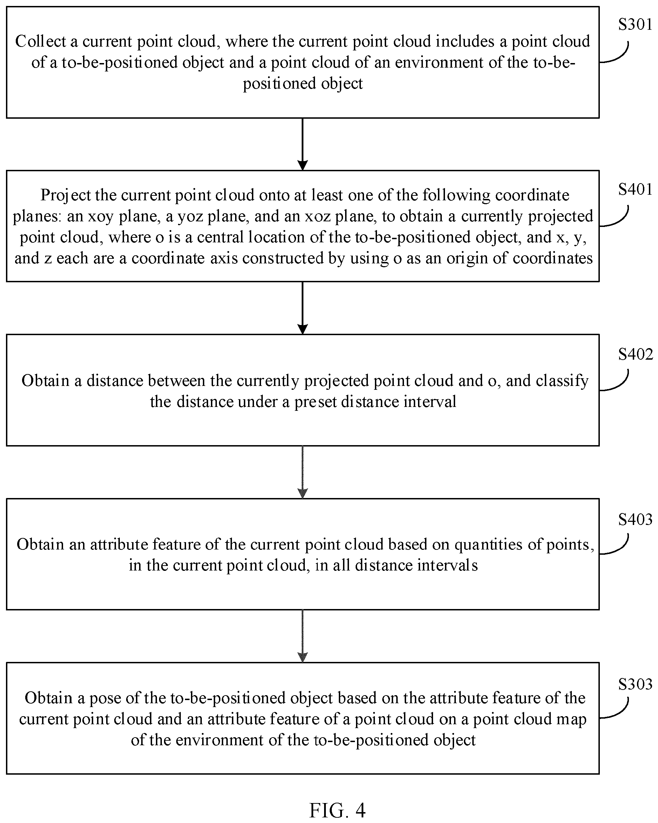

The attribute feature of the point cloud in this embodiment of this application may include at least one of the following: a projection feature of the point cloud. a normal vector feature of the point cloud, and a curvature feature of the point cloud. The following sequentially describes processes of extracting the projection feature, the normal vector feature, and the curvature feature from the current point cloud. First, extracting the projection feature from the current point cloud is described with reference to FIG. 4. FIG. 4 is a schematic flowchart of another embodiment of a positioning method according to an embodiment of this application. As shown in FIG. 4, S302 may be replaced with the following steps:

S401: Project the current point cloud onto at least one of the following coordinate planes: an xoy plane, a yoz plane, and an xoz plane, to obtain a currently projected point cloud, where o is a central location of the to-be-positioned object, and x, y, and z each are a coordinate axis constructed by using o as an origin of coordinates.
S402: Obtain a distance between the currently projected point cloud and o, and classify the distance under a preset distance interval.
S403: Obtain an attribute feature of the current point cloud based on quantities of points, in the current point cloud, in all distance intervals.

In S401, in this embodiment of this application, the current point cloud may be projected onto at least one of the following coordinate planes: the xoy plane, the yoz plane, and the xoz plane, to obtain the currently projected point cloud.

Projecting of the current point cloud may be projecting each point included in the current point cloud, to obtain a projected point corresponding to each point. The currently projected point cloud may include the projected point corresponding to each point. In this embodiment of this application, o is a central location of the to-be-positioned object; and x, y, and z each are a coordinate axis constructed by using o as an origin of coordinates. The central location of the to-be-positioned object may be a location at which the lidar is located, and specifically, a location at which the lidar emits lasers. The coordinate plane may be constructed as follows: using a central location of the to-be-positioned object as an origin of coordinates; setting, on a plane parallel to a horizontal plane, an axis x and an axis y that are perpendicular to each other; and setting, on a plane perpendicular to the horizontal plane, an axis z that passes the origin of coordinates. It should be understood that, in this embodiment of this application, the coordinate plane may alternatively be constructed in another manner.

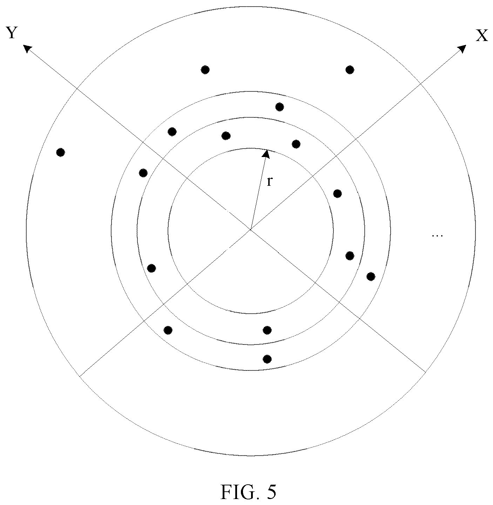

In S402, FIG. 5 is a schematic diagram of projecting a current point cloud onto an xoy plane according to an embodiment of this application. An example in which the current point cloud is projected onto the xoy plane is used for description below. After the current point cloud is projected onto the xoy plane, the currently projected point cloud may be obtained on the xoy plane. As shown in FIG. 5, the xoy plane may include a plurality of points in the currently projected point cloud. The points are represented by black dots. Three consecutive points represent an omitting representation of a distance interval.

In this embodiment of this application, the distance between the currently projected point cloud and o may be obtained, and the distance is classified under the preset distance interval. A distance between each point in the currently projected point cloud and o, namely, a distance between each point and the origin of coordinates, may be obtained. In addition, the distance is classified under the preset distance interval according to the distance between each point and the origin of coordinates. The preset distance interval is predefined. The preset distance interval is related to a farthest distance and a closest distance among points in a point cloud collected by the to-be-positioned object.

For example, if the farthest distance among the points in the point cloud collected by the to-be-positioned object is 80 m, and the closest distance is 0 m, the preset distance may range from 0 m to 80 m. In this embodiment of this application, the preset distance may be divided into a preset quantity of distance intervals. For example, if the preset quantity is 20, 0 m to 4 m may be classified under a distance interval, 4 m to 8 m may be classified under another distance interval, ..., and 76 m to 80 m may be classified under another distance interval. In this way, 20 distance intervals are obtained. It should be understood that, during distance interval division, each distance interval may correspond to a different distance. If a distance interval is 0 m to 4 m, a distance corresponding to this distance interval is 4 m; and if another distance interval is 4 m to 6 m, a distance corresponding to this distance interval is 2 m. A manner of distance interval division is not limited in this embodiment of this application, provided that a quantity of distance intervals meets a preset quantity. In this figure, r represents a distance corresponding to a distance interval.

In S403, the quantities of points, in the current point cloud, in all the distance intervals may be obtained in this embodiment of this application, to obtain an attribute feature (projection feature) of the current point cloud based on the quantities of points, in the current point cloud, in all the distance intervals. For example, if a quantity of points falling into the distance interval 0 m to 4 m is 6, a quantity of points falling into the distance interval 4 m to 8 m is 6, ..., and a quantity of points falling into the distance interval 76 m to 80 m is 2, 20 quantities can be obtained. In addition, the 20 quantities may be arranged in a sequence of the intervals, to obtain a one-dimensional vector. For example, the vector may be (6, 6, ..., 2). In this embodiment of this application, the one-dimensional vector may be used as an attribute feature of the current point cloud.

In a possible implementation, in this embodiment of this application, normalization processing may be further performed on the quantities of points, in the current point cloud, in all the distance intervals, for example, the quantities are reduced by a same factor at the same time, so that all the quantities fall in a range of 0 to 1. For example, the quantities of points, in the current point cloud, in all the distance intervals may be divided by a maximum quantity of the quantities, to obtain a normalized result. Then, a one-dimensional vector is generated based on the normalized result. For example, if the maximum quantity of the points, in the current point cloud, in all the distance intervals is 6, the quantities of points, in the current point cloud, in all the distance intervals may be divided by 6, to obtain a one-dimensional vector (1, 1, ..., 1/3).

In a manner of obtaining the projection feature of the current point cloud, in this embodiment of this application, the current point cloud may be separately projected onto the xoy plane, the yoz plane, and the xoz plane, to obtain a projection feature that is more detailed than the foregoing projection feature obtained by projecting the current point cloud onto the xoy plane. Therefore, a more accurate result can be obtained when matching is performed on the attribute feature in the point cloud map. S401 may be replaced with S401': Separately project the current point cloud onto the xoy plane, the yoz plane, and the xoz plane, to obtain three currently projected point clouds corresponding to the current point cloud. Correspondingly, S402 may be replaced with S402': Obtain a distance between each of the currently projected point clouds of the current point cloud and o; and classify the distance under a preset distance interval on a corresponding coordinate plane. S403 may be replaced with S403': Obtain an attribute feature of the current point cloud based on quantities of points, in the current point cloud, in all distance intervals on each of the coordinate planes.

For a projection manner in S401, refer to the foregoing related description. A difference is that the current point cloud is projected onto three coordinate planes herein, so that three currently projected point clouds of the current point cloud can be obtained.

In S402', because there are three currently projected point clouds herein, distances between these currently projected point clouds and o may be obtained in a manner the same as that in S402; and the distances between these currently projected point clouds and o are respectively classified under preset distance intervals on corresponding coordinate planes. Obtaining a distance between each currently projected point cloud and o may be obtaining a distance between each point in the currently projected point cloud and o, so as to obtain a distance between each point in each of the three currently projected point clouds and o.

Different from the foregoing description, in this embodiment of this application, each coordinate plane (the xoy plane, the yoz plane, or the xoz plane) has a correspondingly preset distance interval. For example, distance intervals on the xoy plane are 0 m to 4 m, 4 m to 8 m, ..., and 76 m to 80 m; distance intervals on the yoz plane are 0 m to 4 m, 4 m to 6 m, ..., and 76 m to 80 m; and distance intervals on the xoz plane are 0 m to 1 m, 1 m to 2 m, ..., and 7 m to 8 m. It should be noted that preset quantities of distance intervals corresponding to the coordinate planes may be different or the same.

In S403', in this embodiment of this application, the quantities of points, in the current point cloud, in all the distance intervals on each coordinate plane are obtained, so as to obtain an attribute feature of the current point cloud based on the quantity of the points, in the current point cloud, in all distance intervals on each coordinate plane. The quantities of points, in the current point cloud, in all the distance intervals on each coordinate plane may be arranged according to a sequence of the coordinate planes (for example, a sequence of the xoy plane, the yoz plane, and the xoz plane, which may be pre-agreed) and a sequence of the distance intervals on each coordinate plane, to obtain a one-dimensional vector. The one-dimensional vector is used as an attribute feature of the current point cloud. For example, a preset quantity of distance intervals corresponding to each coordinate plane is 20; quantities of points that fall into the distance intervals on the xoy plane are 6, 6, ..., 2; quantities of points that fall into the distance intervals on the yoz plane are 1, 2, ..., 3; and quantities of points that fall into the distance intervals on the xoz plane are 2, 4, ..., 8. In this case, the one-dimensional vector may be (6, 6, ..., 2, 1, 2, ..., 3, 2, 4, ..., 8).

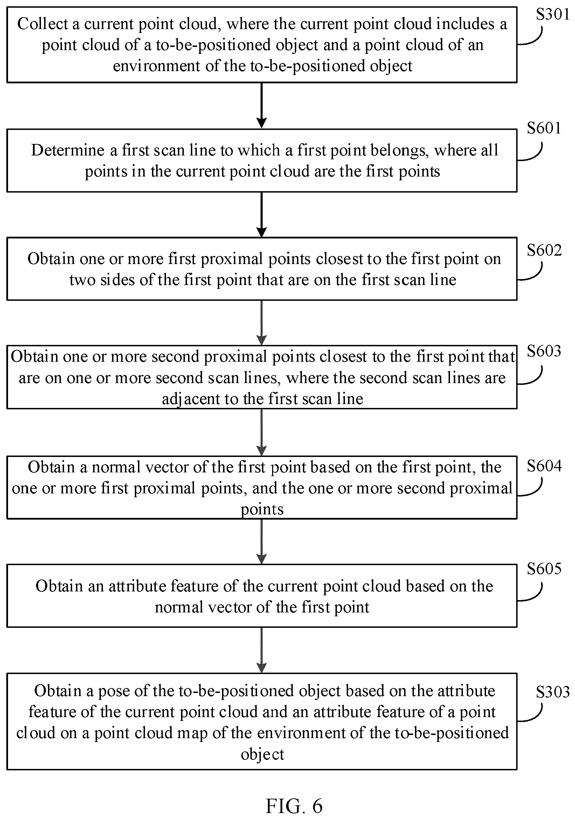

Second, extracting the normal vector feature from the current point cloud is described with reference to FIG. 6. FIG. 6 is a schematic flowchart of still another embodiment of a positioning method according to an embodiment of this application. As shown in FIG. 6, S302 may be replaced with the following steps:

S601: Determine a first scan line to which a first point belongs, where all points in the current point cloud are the first points.
S602: Obtain one or more first proximal points closest to the first point on two sides of the first point that are on the first scan line.
S603: Obtain one or more second proximal points closest to the first point that are on one or more second scan lines, where the second scan lines are adjacent to the first scan line.
S604: Obtain a normal vector of the first point based on the first point, the one or more first proximal points, and the one or more second proximal points.
S605: Obtain an attribute feature of the current point cloud based on the normal vector of the first point.

In S601, for ease of description, in this embodiment of this application, all the points included in the current point cloud are referred to as first points. In other words, in this embodiment of this application, steps S601 to S604 are performed on all the first points. A lidar can emit a plurality of laser scan lines at a time when emitting lasers; and each laser scan line can be reflected when meeting an object in a room. For example, a 16-line lidar can simultaneously emit 16 laser scan lines. When obtaining the current point cloud, the to-be-positioned object can determine a scan line to which a point in the current point cloud belongs, so that the first scan line to which the first point belongs can be determined in this embodiment of this application.

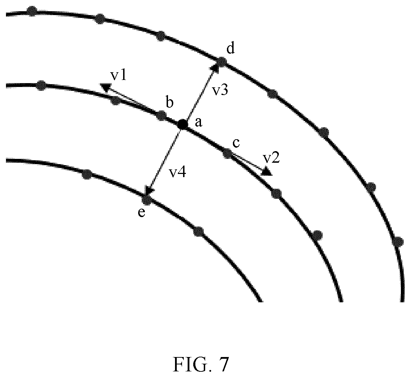

In S602, one scan line may include a plurality of points. For the first point, in this embodiment of this application, the one or more first proximal points closest to the first point may be obtained on two sides of the first point that are on the first scan line. FIG. 7 is a schematic diagram of points on a scan line according to an embodiment of this application. As shown in FIG. 7, for a first point a on the first scan line, first proximal points that are closest to the first point and that are obtained on two sides of the first point a on the scan line are a point b and a point c, respectively. It should be understood that if there is only one point adjacent to the first point a on the first scan line, the one point may be used as the first proximal point of the point a.

In S603, in this embodiment of this application, the one or more second proximal points closest to the first point may be further obtained on the one or more second scan lines that are adjacent to the first scan line. As shown in FIG. 7, second proximal points on the second scan lines are a point d and a point e, respectively. It should be understood that when there is only one second scan line adjacent to the first scan line, one second proximal point may be obtained on the second scan line.

In S604, in this embodiment of this application, the normal vector of the first point may be obtained based on the first point, the one or more first proximal points, and the one or more second proximal points. In this embodiment of this application, the method may include: obtaining no or one or more first vectors from the first point to the one or more first proximal points; obtaining one or more second vectors from the first point to the one or more second proximal points; and obtaining the normal vector of the first point based on the first vectors and the second vectors.

In a possible implementation, for example, first vectors from the point a to the point b and from the point a to the point c are a vector v1 and a vector v2, respectively; and second vectors from the point a to the point d and from the point a to the point e are a vector v3 and a vector v4, respectively. In this embodiment of this application, any vector that is perpendicular to the vector v1, the vector v2, the vector v3, and the vector v4 is used as a normal vector of the point a.

In a possible implementation, there is not necessarily a vector that is perpendicular to all of the vector v1, the vector v2, the vector v3, and the vector v4. Therefore, in this embodiment of this application, cross product calculation may be performed on two of the first vectors and the second vectors; and then, cross product results are used to approximately represent vectors perpendicular to all of the vector v1, the vector v2, the vector v3, and the vector v4. In this embodiment of this application, an average value of all the results of the cross product calculation may be used as the normal vector of the first point. For example, cross product calculation is performed on the vector v1 and the vector v2, cross product calculation is performed on the vector v2 and the vector v3, ..., and cross product calculation is performed on the vector v3 and the vector v4, to obtain a plurality of cross product results. In this embodiment of this application, an average value of the plurality of results of the cross product calculation may be used as a normal vector of the first point.

For example, the normal vector $n_i$ of the first point may be calculated according to the following formula 1:

$$n_i = \frac{1}{4} \sum_{i=1}^{m} (v_i \times v_{i\%4+1})$$

Formula 1

$i$ denotes any first point in the current point cloud; m denotes the sum of quantities of first vectors and second vectors corresponding to the first point; $v_i$ denotes the first vector or the second vector; and $v_{i\%4+1}$ denotes a vector that is used in the cross product calculation with the first vector or the second vector.

It should be noted that the point a may not have any first vector, or may have one first vector; and the point a may have one second vector. The normal vector of the first point a may be obtained in a manner the same as the foregoing manner. For example, the lidar in this embodiment of this application may be a 16-line lidar that can emit 16 lasers at a time (for example, the 16 lasers may be emitted at a same point, the 16 lasers form a sector plane, and angles between two adjacent lasers may be the same). In this embodiment of this application, to ensure that each first point has two first vectors and two second vectors, first points on two lasers that are at edge locations among the 16 lasers may not be calculated. If the 16 lasers are sequentially arranged from top to bottom, normal vectors of first points on the topmost and bottommost lasers may not be calculated.

In S605, the attribute feature of the current point cloud may be obtained based on the normal vector of the first point. In a possible implementation, in this embodiment of this application, a set of normal vectors of the first point may be used as the normal vector feature of the current point cloud.

In a possible implementation, a length of a projection of a normal vector of the first point on at least one coordinate axis may be obtained in this embodiment of this application; and the length is classified under a preset length interval. Herein, the length of the projection of the normal vector of the first point on the axis x is obtained as an example for description. If the normal vector of the first point is projected onto the axis x, the length of the projection of the normal vector of the first point on the axis x may be obtained, where the length is equal to a value of a component of the normal vector of the first point on the axis x. Obtaining a length of a projection of the normal vector of the first point on one coordinate axis in this embodiment of this application may be: obtaining a length of a projection of the normal vector of the first point on the coordinate axis z. In the current point cloud, a height value (corresponding to the axis z) of the point cloud has a more obvious length feature than a length value (corresponding to the axis x and the axis y) on a horizontal plane. Therefore, obtaining, as the length of the projection of the normal vector of the first point on the one coordinate axis, the length of the projection of the normal vector of the first point on the coordinate axis z facilitates ensuring feature matching accuracy and positioning accuracy.

In this embodiment of this application, after the length of the projection of the normal vector of the first point on the at least one coordinate axis is obtained, the length may be classified under a preset length interval. It should be understood that different coordinate axes may correspond to different preset length intervals (similar to the foregoing preset distance intervals). Therefore, quantities of first points in all length intervals corresponding to at least one coordinate axis may be obtained. Similar to the foregoing manner of obtaining the projection feature of the current point cloud, in this embodiment of this application, the attribute feature (normal vector feature) of the current point cloud may also be obtained based on the quantities of first points in all the length intervals. It should be understood that the preset length interval in this embodiment of this application may be an empirical value. The preset length interval is related to a length of a projection of the normal vector of the first point on the coordinate axis. In this embodiment of this application, the preset length interval may alternatively be determined based on the length of the projection of the normal vector of the first point on the coordinate axis. For example, a maximum length of a projection of the first point on the coordinate axis is 10 m, and a minimum length thereof is 0 m. In this case, it may be determined that 0 m to 10 m is divided into preset length intervals. For example, 0 m to 10 m is divided into 20 length intervals of a same length. In this case, a length of each preset length interval is 0.5 m.

For example, a quantity of length intervals corresponding to each coordinate axis is 20. Quantities of first points in length intervals on the axis x are 3, 4, ..., 8: quantities of first points in length intervals on the axis y are 1, 2, ..., 4; and quantities of first points in length intervals on the axis z are 3, 4, ..., 6. In this case, the attribute feature of the current point cloud may be a one-dimensional vector (3, 4, ..., 8, 1, 2, ..., 4, 3, 4, ..., 6) formed by the quantities of first points in all the length intervals on all the axes. Optionally, in this embodiment of this application, when only the length of the projection of the normal vector of the first point on the coordinate axis z is obtained, the attribute feature of the current point cloud may be (3, 4, ..., 6). It should be understood that in this embodiment of this application, after the quantities of first points in all the length intervals are obtained, normalization processing may be performed to obtain the attribute feature of the current point cloud. For a specific manner, refer to the foregoing related description of normalization processing performed on the quantities of points in all the distance intervals.

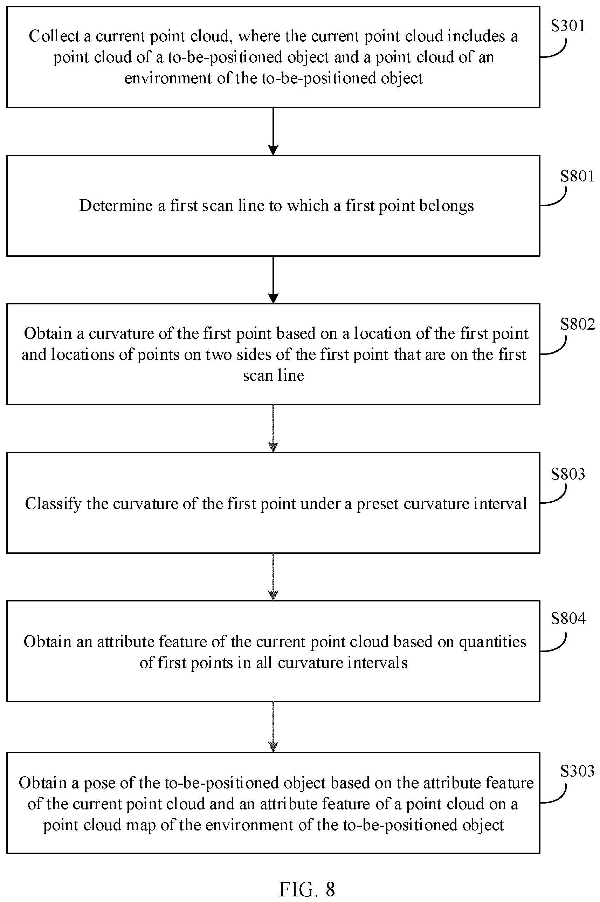

Third, extracting the curvature feature from the current point cloud is described with reference to FIG. 8. FIG. 8 is a schematic flowchart of yet another embodiment of a positioning method according to an embodiment of this application. As shown in FIG. 8, S302 may be replaced with the following steps:

S801: Determine a first scan line to which a first point belongs.

S802: Obtain a curvature of the first point based on a location of the first point and locations of points on two sides of the first point that are on the first scan line.

S803: Classify the curvature of the first point under a preset curvature interval.

S804: Obtain an attribute feature of the current point cloud based on quantities of first points in all curvature intervals.

It should be understood that, for details about an implementation of S801 in this embodiment of this application, reference may be made to the related description in S601. Details are not described again.

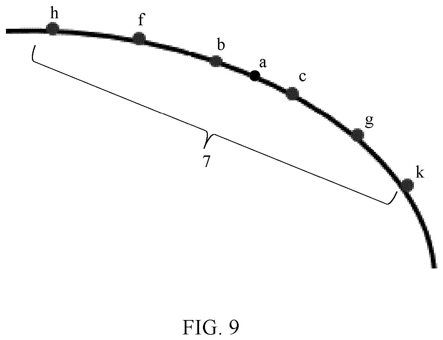

In S802, the points on the two sides of the first point may be a preset quantity of points on the two sides of the first point. For example, if the preset quantity is 3, there may be three points on each of the two sides of the first point. Plus the first point, there are a total of seven points. FIG. 9 is a schematic diagram of a first point and points on two sides of the first point according to an embodiment of this application. As shown in FIG. 9, on the first scan line, the first point is a point a, and the points on the two sides of the point a are respectively a point b, a point c, a point f, a point g, a point h, and a point k. In this embodiment of this application, the curvature of the first point may be obtained based on the location of the first point and the locations of the points on the two sides of the first point on the first scan line. The location of the first point may be three-dimensional spatial coordinates of the first point. The locations of the points on the two sides of the first point may be three-dimensional spatial coordinates of the points on the two sides of the first point. The curvature $c_i$ of the first point may be calculated according to the following formula 2:

$$c_i = \frac{1}{\| p_i \|} \| \sum_{j \in S, j \neq i} (p_i - p_j) \|$$

Formula 2

$p_i$ denotes a location of the first point. $p_j$ denotes a location of any one of the points on the two sides of the first point. S denotes the preset quantity of the points on the two sides of the first point.

In S803, the curvature of the first point may be classified under the preset curvature interval after the curvature of the first point in the current point cloud is obtained. It should be understood that the preset curvature interval is also predefined. A quantity of preset curvature intervals may be the same as a quantity of the distance intervals and a quantity of the length intervals. For example, all the quantities are 20.

In S804, the quantities of first points in all the curvature intervals may be obtained after the curvature of the first point is classified under the preset curvature interval. Then, the attribute feature (curvature feature) of the current point cloud is obtained based on the quantities of first points in all the curvature intervals. It should be understood that a process of obtaining the attribute feature of the current point cloud based on the quantities of first points in all the curvature intervals is similar to a process of obtaining the projection feature and the normal vector feature. For details, refer to related descriptions in the foregoing embodiments. For example, the curvature feature may be a vector (1, 1, ..., 1). It should be understood that in this embodiment of this application, after the quantities of first points in all the curvature intervals are obtained, normalization processing may be performed to obtain the attribute feature of the current point cloud. For a specific manner, refer to the foregoing related description of normalization processing performed on the quantities of points in all the distance intervals.

It should be understood that the foregoing separately describes processes of extracting the projection feature, the normal vector feature, and the curvature feature in the current point cloud. The attribute feature of the point cloud in this embodiment of this application may include at least one of the projection feature, the normal vector feature, and the curvature feature. To obtain the attribute feature of the current point cloud more accurately, the projection feature, the normal vector feature, and the curvature feature may be extracted from the current point cloud. A more accurate attribute feature leads to more accurate positioning of the to-be-positioned object.

When the attribute feature of the point cloud includes the projection feature, the normal vector feature, and the curvature feature, S302 may be replaced with S401 to S403, S601 to S605, and S801 to S804. Correspondingly, the attribute feature of the current point cloud may be a recombination of one-dimensional vectors corresponding to the projection feature, the normal vector feature, and the curvature feature, for example, a vector corresponding to the attribute feature of the current point cloud may be (6, 6, ..., 2, 1, 2, ..., 3, 2, 4, ..., 8, 3, 4, ..., 6, 1, 1, ..., 1). When the attribute feature of the current point cloud is a one-dimensional vector whose length is 100, a length of a vector corresponding to the projection feature is 60, and lengths of vectors corresponding to the normal vector feature and the curvature feature are 20.

In this embodiment of this application, the attribute feature of the current point cloud may include at least one of the following: the projection feature of the point cloud, the normal vector feature of the point cloud, and the curvature feature of the point cloud. Any of the attribute features can effectively distinguish between similar scenes. Therefore, accurate positioning can be implemented. When the attribute feature of the current point cloud includes the projection feature, the normal vector feature, and the curvature feature, the attribute feature of the current point cloud is described more accurately and comprehensively. Therefore, positioning accuracy of the to-be-positioned object can be further improved.

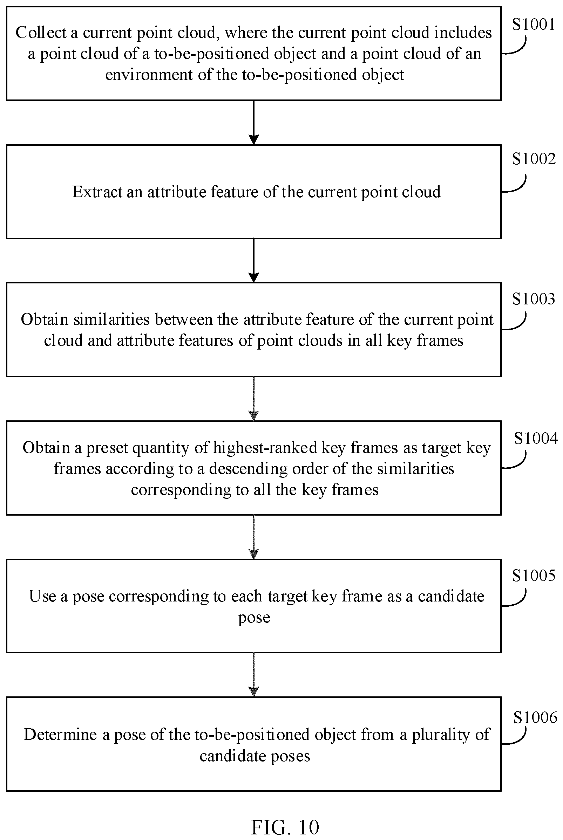

Based on the foregoing embodiments, in this embodiment of this application, after the pose of the to-be-positioned object is obtained based on the attribute feature of the current point cloud, the pose of the to-be-positioned object may be further accurately determined with reference to ICP matching, thereby improving positioning accuracy. FIG. 10 is a schematic flowchart of still yet another embodiment of a positioning method according to an embodiment of this application. As shown in FIG. 10, the positioning method in this embodiment of this application may include the following steps:

S1001: Collect a current point cloud, where the current point cloud includes a point cloud of a to-be-positioned object and a point cloud of an environment of the to-be-positioned object.

S1002: Extract an attribute feature of the current point cloud.

S1003: Obtain similarities between the attribute feature of the current point cloud and attribute features of point clouds in all key frames.

S1004: Obtain a preset quantity of highest-ranked key frames as target key frames according to a descending order of the similarities corresponding to all the key frames.

S1005: Use a pose corresponding to each target key frame as a candidate pose.

S1006: Determine a pose of the to-be-positioned object from a plurality of candidate poses.

It should be understood that, for details about implementations of S1001 and S1002 in this embodiment of this application, reference may be made to the related descriptions of S301 and S302 in the foregoing embodiment. Details are not described herein again.

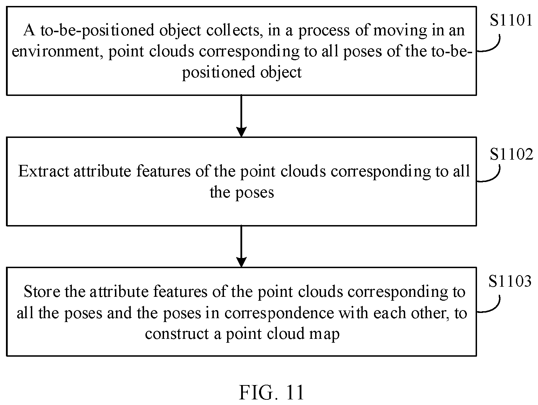

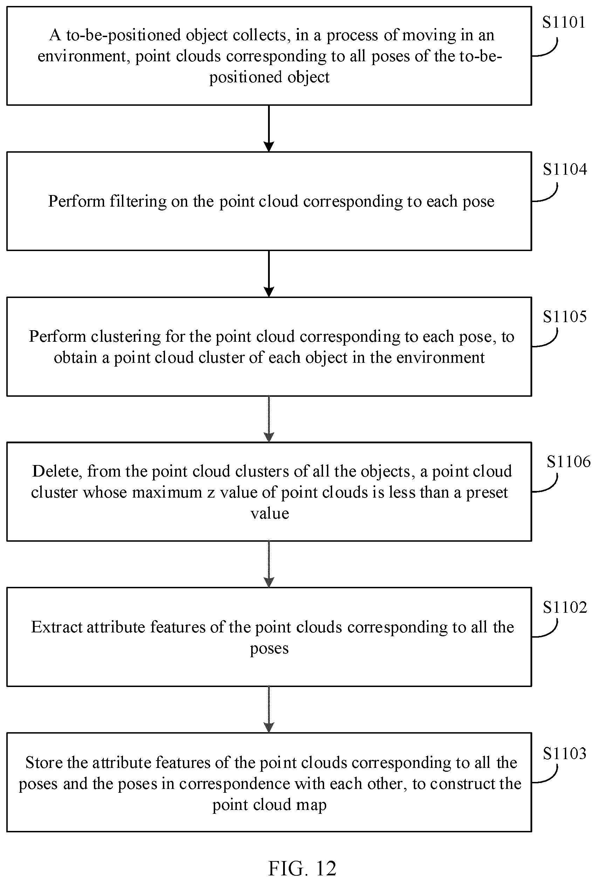

In S1003, in this embodiment of this application, the point cloud map may include attribute features of point clouds in a plurality of key frames. The key frames may be frames in which the point clouds are collected. For example, a point cloud collected in a frame is a point cloud in a key frame. In other words, the point cloud map includes attribute features of point clouds in a plurality of frames. It should be understood that point clouds in different frames are collected when the to-be-positioned object is in different poses. For a process of obtaining the point cloud map in this embodiment of this application, reference may be made to related descriptions of FIG. 11 and FIG. 12.

When obtaining the pose of the to-be-positioned object by using the attribute feature of the current point cloud and the attribute feature of the point cloud on the point cloud map, the to-be-positioned object may obtain the similarities between the attribute feature of the current point cloud and the attribute features of the point clouds in all the key frames, that is, similarities (for example, a Euclidean distance) between a one-dimensional vector corresponding to the current point cloud and one-dimensional vectors corresponding to the point clouds in all the key frames.

In S 1004, in this embodiment of this application, after the similarities between the attribute feature of the current point cloud and the attribute features of the point clouds in all the key frames are obtained, the preset quantity of highest-ranked key frames may be obtained as the target key frames according to the descending order of the similarities corresponding to all the key frames. For example, if the preset quantity is 10, 10 highest-ranked key frames in the point cloud map according to rankings of the similarities may be used as the target key frames. In other words, in this embodiment of this application, several candidate key frames are first determined based on matching for an attribute feature of a point cloud.

In S1005, the point clouds in the key frames of the point cloud map are collected when the to-be-positioned object is in different poses. Therefore, the point cloud in each key frame of the point cloud map corresponds to one pose. Correspondingly, the target key frame also corresponds to a pose. In this embodiment of this application, after determining the target key frames with the relatively high similarities to the attribute feature of the current point cloud, the to-be-positioned object may use a pose corresponding to each target key frame as a candidate pose.

In S1006, in this embodiment of this application, the pose of the to-be-positioned object may be determined from the plurality of candidate poses. In a possible implementation, in this embodiment of this application, an average value of the plurality of candidate poses may be used as the pose of the to-be-positioned object. For example, the pose of the to-be-positioned object is obtained by using an average value of locations (three-dimensional spatial coordinates) in the poses as a location of the to-be-positioned object and using an average value of postures (such as orientations) in the poses as a posture of the to-be-positioned object.

To determine the pose of the to-be-positioned object more accurately, in a possible implementation, an ICP algorithm may also be used in this embodiment of this application to determine the pose of the to-be-positioned object from the plurality of candidate poses. Each candidate pose corresponds to a conversion relationship (R, T), where R is a rotation matrix, and T is a translation matrix, that is, a point cloud in actual space may be converted into the point cloud map by using the conversion relationship. In other words, the conversion relationship may be understood as a conversion relationship between a coordinate system of the actual space and a coordinate system of the point cloud map.

In this embodiment of this application, the method may include: converting the current point cloud into the point cloud map according to conversion relationships that correspond to the candidate poses, to obtain converted point clouds corresponding to the candidate poses; and obtaining, from the point cloud map, target point clouds that are closest to the converted point clouds corresponding to the candidate poses. For example, the converted point cloud corresponding to the candidate pose 1 includes a plurality of points. Points closest to all the plurality of points may be obtained from the point cloud map; and a point cloud including the points closest to all the plurality of points is the target point cloud. Each point in the target point cloud is closest to a corresponding point in the converted point cloud corresponding to the candidate pose.

After determining the target point cloud of the converted point cloud corresponding to each candidate pose, the to-be-positioned object may perform ICP matching on the converted point clouds corresponding to the candidate poses and the corresponding target point clouds, to obtain a converted point cloud with a highest matching degree. A matching degree may be obtained by performing iterative closest point ICP matching on the converted point cloud corresponding to each candidate pose and the corresponding target point cloud. In this embodiment of this application, the converted point cloud with the highest matching degree may be determined. Further, the to-be-positioned object may obtain the pose of the to-be-positioned object based on a pose corresponding to the converted point cloud with the highest matching degree and a conversion relationship obtained through the ICP matching. The pose corresponding to the converted point cloud with the highest matching degree may be a pose corresponding to a conversion relationship that corresponds to the converted point cloud. It should be understood that an ICP matching result may include not only the foregoing matching degree, but also a conversion relationship obtained through matching (namely, a conversion relationship obtained based on each point and a point closest to the point). Therefore, in this embodiment of this application, the pose of the to-be-positioned object may be obtained based on the pose corresponding to the converted point cloud with the highest matching degree and the conversion relationship obtained through the ICP matching. It should be understood that an ICP matching algorithm is not described in detail in this embodiment of this application. For details, refer to a related description in a current technical solution.

For example, the pose corresponding to the converted point cloud with the highest matching degree is $P_i$; and the conversion relationship obtained through the ICP matching is T. In this case, the pose $P$ of the to-be-positioned object may be calculated according to the following formula 3:

$$P = T \cdot P_i$$

Formula 3

In this embodiment of this application, the candidate poses of the to-be-positioned object may be preliminarily determined based on matching for the attribute feature of the point cloud first; and then, the pose of the to-be-positioned object is determined from the candidate poses with reference to the ICP algorithm. Compared with the foregoing embodiment, accuracy of the pose of the to-be-positioned object can be further improved.

The following Table 1 shows accuracy of positioning by the positioning methods shown in FIG. 10, FIG. 1, and FIG. 2.

Table 1

| Method | Location 1 | Location 2 | Location 3 | Location 4 |
|---|---|---|---|---|
| Method corresponding to FIG. 10 | 91.1% | 93.2% | 90.3% | 95.2% |
| Method corresponding to FIG. 1 | 60.2% | 83.7% | 66.5% | 50.1% |
| Method corresponding to FIG. 2 | 48.5% | 77.2% | 46.3% | 78% |

Because a process of constructing the point cloud map is not described in the foregoing embodiments, the process of constructing the point cloud map is first described herein with reference to FIG. 11. FIG. 11 is a schematic flowchart of an embodiment of constructing a point cloud map according to an embodiment of this application. As shown in FIG. 11, construction of a point cloud map provided in this embodiment of this application may include the following steps.

S1101: A to-be-positioned object collects. in a process of moving in an environment, point clouds corresponding to all poses of the to-be-positioned object.

S1102: Extract attribute features of the point clouds corresponding to all the poses.

S1103: Store the attribute features of the point clouds corresponding to all the poses and the poses in correspondence with each other, to construct the point cloud map.

It should be understood that, for details about S1102 in this embodiment of this application, reference may be made to the related description of S302 in the foregoing embodiment. It should be noted that an attribute feature of a point cloud in the point cloud map is consistent with an attribute feature extracted from a current point cloud. For example, if the attribute feature of the point cloud in the map is a projection feature, the attribute feature extracted from the current point cloud is also a projection feature. Specific attribute features to be extracted may be agreed in advance.

In S1101, the to-be-positioned object may move in the environment of the to-be-positioned object, and may collect the point cloud corresponding to each pose of the to-be-positioned object in the moving process. The point cloud corresponding to each pose may be a point cloud in a key frame. Optionally, in this embodiment of this application, a point cloud in a key frame may be collected each time the to-be-positioned object moves by a preset distance. Optionally, a point cloud in a key frame may be collected each time the to-be-positioned object moves for preset duration.

It should be understood that when the to-be-positioned object collects a point cloud in a key frame, a pose of the to-be-positioned object may be made corresponding to the key frame, so as to determine the point cloud in the key frame corresponding to the pose. In this embodiment of this application, the to-be-positioned object may obtain a pose of the to-be-positioned object according to an open-source simultaneous localization and mapping construction (simultaneous localization and mapping, SLAM) algorithm. For details about this process, refer to a related description in a current technical solution. The details are not described herein.

In S1103, after all the poses of the to-be-positioned object and the attribute features of the point clouds corresponding to the poses are obtained, the attribute features of the point clouds corresponding to the poses and the poses may be stored in correspondence with each other, so as to construct the point cloud map. The point cloud map may include the attribute feature of the point cloud corresponding to each pose (the attribute feature of the point cloud corresponding to each key frame) and a point cloud.

In a possible case, a point cloud map of the environment of the to-be-positioned object may change at any time. For example, in an underground parking garage, fixed objects such as a pillar, ground, and a lamp remain unchanged, but a vehicle in the underground parking garage may enter and exit at any time. As a result, the point cloud map is affected; and accuracy of matching based on the point cloud map is affected. Therefore, in this embodiment of this application, during construction of a point cloud map, a changeable point cloud (for example, a point cloud of a vehicle in an underground parking garage) may be deleted, so that a point cloud on a point cloud map constructed by using point clouds obtained through the deletion is unchanged. This helps improve positioning accuracy. FIG. 12 is a schematic flowchart of another embodiment of constructing a point cloud map according to an embodiment of this application. As shown in FIG. 12, before S1102, the method may further include the following steps:

S1104: Perform filtering on the point cloud corresponding to each pose.

S1105: Perform clustering for the point cloud corresponding to each pose, to obtain a point cloud cluster of each object in the environment.

S1106: Delete, from the point cloud clusters of all the objects, a point cloud cluster whose maximum z value of point clouds is less than a preset value.

Correspondingly, S1102 may be replaced with S1102': Extract an attribute feature of the point cloud that corresponds to each pose and that is obtained through the deletion.

It should be understood that, for details about extracting, in S1102', the attribute feature of the point cloud that corresponds to each pose and that is obtained through the deletion, reference may be made to the related description of S302.

In S1104, in this embodiment of this application, the filtering may be performed on the point cloud of each pose by using a voxel grid filter in a point cloud library (point cloud library, PCL), to simplify a complex point cloud, but retain a feature of the point cloud, thereby reducing a calculation amount of subsequent processing. For a specific filtering manner, refer to a related description in a current technical solution.

In S1105, after the filtering is performed on the point cloud corresponding to each pose, to delete a changeable point cloud caused by a changeable object in the environment of the to-be-positioned object, the point cloud corresponding to each pose may be clustered, thereby obtaining the point cloud cluster of each object in the environment. The clustering in this embodiment of this application is clustering, into one type, point clouds that belong to a same object and that correspond to each pose, to form a point cloud cluster. For example, the environment of the to-be-positioned object is an underground parking garage. In this case, clustering the point cloud corresponding to each pose may obtain a point cloud cluster that belongs to the ground and corresponds to the pose, a point cloud cluster that belongs to a vehicle and corresponds to the pose, a point cloud cluster that belongs to a pillar and corresponds to the pose, and the like.

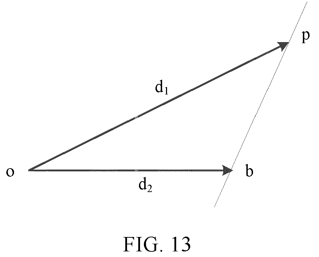

It should be understood that, in this embodiment of this application, a manner of clustering the point cloud corresponding to each pose may be (a point cloud corresponding to any pose is used as an example for description): projecting each point in the point cloud onto any coordinate plane, and calculating an angle between a projected point of the point on the coordinate plane and a surrounding projected point, so as to cluster points in the point cloud by using the angle. For example, an xoy coordinate plane is pre-divided into matrices. For example, for a 16-line lidar, a size of the matrices into which the xoy coordinate plane may be pre-divided may be $16 \times 1800$, where 1800 is related to a rotation angle of horizontal resolution of the lidar. In this embodiment of this application, after each point in the point cloud is projected onto the xoy coordinate plane, that is, each point is projected onto the matrix of the xoy coordinate plane, angles between a projected point of each point on the xoy coordinate plane and three projected points closest to the projected point may be obtained. FIG. 13 is a schematic diagram of obtaining an angle between projected points according to an embodiment of this application. As shown in FIG. 13, an xoy coordinate plane includes a projected point p and a projected point b. In this embodiment of this application, a distance $d_1$ from the projected point p to an origin of coordinates o and a distance $d_2$ from the projected point b to the origin of coordinates o may be separately obtained; and then, an angle angle between the projected point p and the projected point b is obtained according to the following formula 4:

$$\text{angle} = \frac{d_2 \sin\alpha}{d_1 - d_2 \cos\alpha} \qquad\qquad \text{Formula 4}$$

$\alpha$ represents horizontal angle resolution or vertical angle resolution of the lidar.

In this embodiment of this application, after angles between a projected point of each point and three surrounding projected points are obtained, if there is an angle greater than a preset angle (for example, 30 degrees), it is considered that a point corresponding to the surrounding projected points and a point corresponding to the projected point belong to point cloud clusters of different objects. According to the foregoing manner, all points in a point cloud are traversed, and division is performed based on whether point cloud clusters belong to a same object, to obtain point cloud clusters of different objects.

In S1106, because a vehicle in the underground parking garage is parked on the ground, the vehicle parked in the underground parking garage has a maximum height in a spatial coordinate system, and a plurality of point cloud clusters can be obtained by clustering point cloud clusters of all objects, but an object to which each point cloud cluster corresponds cannot be determined. Therefore, in this embodiment of this application, after the point cloud cluster corresponding to each pose is obtained, a point cloud cluster corresponding to the vehicle can be deleted based on z values of points included in each point cloud cluster. For example, in this embodiment of this application, a point cloud cluster (namely, a point cloud cluster corresponding to the vehicle) whose maximum z value of point clouds is less than a preset value may be deleted. For example, the preset value is 2.5 m. In this embodiment of this application, a point cloud cluster whose maximum height of point clouds is less than 2.5 m may be deleted from all point cloud clusters, to obtain a point cloud cluster of all objects other than a vehicle, so that a point cloud of a static object in the environment of the to-be-positioned object can be obtained, thereby improving accuracy of the point cloud map.

It should be noted that a point cloud cluster. in the underground parking garage, whose maximum height of point clouds is less than 2.5 m may be a point cloud cluster of a static object in the underground parking garage, for example, a point cloud cluster of the ground, or a point cloud cluster of an isolation pier, an anti-collision pier, or the like on the ground. Therefore, in this embodiment of this application, a static object in the underground parking garage may be used as a preset object; and a point cloud cluster whose maximum z value of point clouds is less than the preset value is deleted from the point cloud clusters of all the objects except the preset object. For example, the point cloud cluster whose maximum z value of point clouds is less than the preset value is deleted from the point cloud clusters of all the objects except the ground, and the isolation pier, the anti-collision pier, and the like on the ground. In this way, a detailed and complete point cloud of the underground parking garage can be retained, thereby improving accuracy of the point cloud map.

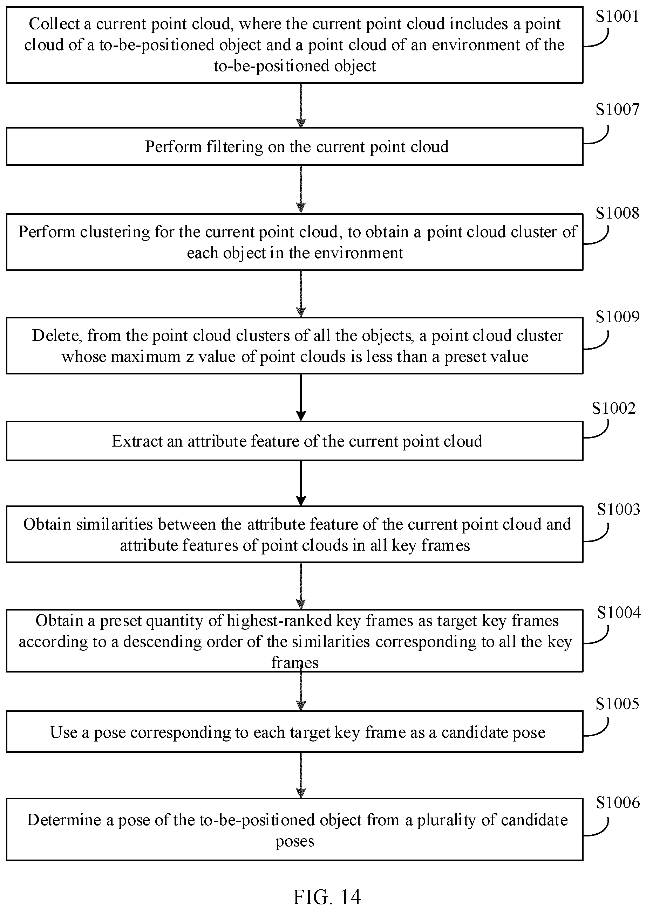

Correspondingly, in this case, FIG. 14 is a schematic flowchart of a further embodiment of a positioning method according to an embodiment of this application. As shown in FIG. 14, before S1002, the method may further include the following steps:

S1007: Perform filtering on the current point cloud.
S1008: Perform clustering for the current point cloud, to obtain a point cloud cluster of each object in the environment.
S1009: Delete, from the point cloud clusters of all the objects, a point cloud cluster whose maximum z value of point clouds is less than a preset value.

Correspondingly, S1002 may be replaced with S1002': Extract the attribute feature of the current point cloud obtained through the deletion.

It should be understood that, for implementations of S1007 to S1009 in this embodiment of this application, reference may be made to the related descriptions of S1104 to S1106. A difference lies in that S1104 to S1106 are used for processing point clouds corresponding to a plurality of key frames, but the S1007 to S1009 are used for processing a current point cloud.

The following Table 2 shows accuracy of positioning by the positioning methods shown in FIG. 14, FIG. 1, and FIG. 2.

Table 2

| Method | Quantity of vehicles: 0 | Quantity of vehicles: 15 | Quantity of vehicles: 30 | Quantity of vehicles: 45 |
|---|---|---|---|---|
| Method corresponding to FIG. 14 | 94.7% | 95.6% | 96.3% | 94.9% |
| Method corresponding to FIG. 1 | 70.2% | 83.4% | 86.6% | 77.9% |
| Method corresponding to FIG. 2 | 44.6% | 58.2% | 60.4% | 66.7% |

In this embodiment of this application, in one aspect, matching for an attribute feature of a point cloud is combined with an ICP algorithm, so that positioning accuracy in a similar scene can be improved. In another aspect, during construction of a point cloud map, a point cloud of an object whose location changes in a scene may be deleted, thereby improving accuracy of the point cloud map and accuracy of positioning. In addition, before an attribute feature of a current point cloud is extracted, the point cloud of the object whose location changes in the scene is also deleted, so that positioning accuracy of the to-be-positioned object can be further improved.

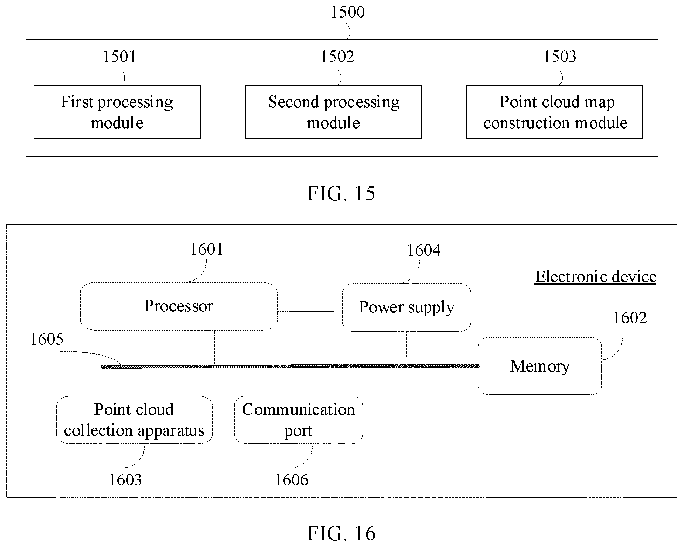

FIG. 15 is a schematic diagram of a structure of a positioning apparatus according to an embodiment of this application. The positioning apparatus shown in FIG. 15 may be the to-be-positioned object in the foregoing embodiments, and may perform the positioning methods in FIG. 3, FIG. 4, FIG. 6, FIG. 8, FIG. 10 to FIG. 12, and FIG. 14. The positioning apparatus 1500 may include a first processing module 1501, a second processing module 1502, and a point cloud map construction module 1503.

The first processing module 1501 is configured to collect a current point cloud, where the current point cloud includes a point cloud of a to-be-positioned object and a point cloud of an environment of the to-be-positioned object.

The second processing module 1502 is configured to: extract an attribute feature of the current point cloud, and obtain a pose of the to-be-positioned object based on the attribute feature of the current point cloud and an attribute feature of a point cloud on a point cloud map of the environment of the to-be-positioned object.

In a possible implementation, the attribute feature includes at least one of the following: a projection feature of the point cloud, a normal vector feature of the point cloud, and a curvature feature of the point cloud.

In a possible implementation, the attribute feature includes the projection feature of the point cloud; and the second processing module 1502 is specifically configured to: project the current point cloud onto at least one of the following coordinate planes: an xoy plane, a yoz plane, and an xoz plane, to obtain a currently projected point cloud, where o is a central location of the to-be-positioned object, and x, y, and z each are a coordinate axis constructed by using o as an origin of coordinates; obtain a distance between the currently projected point cloud and o; classify the distance under a preset distance interval; and obtain the attribute feature of the current point cloud based on quantities of points, in the current point cloud, in all distance intervals.

In a possible implementation, the second processing module 1502 is specifically configured to: separately project the current point cloud onto the xoy plane, the yoz plane, and the xoz plane, to obtain three currently projected point clouds corresponding to the current point cloud; obtain a distance between each of the currently projected point clouds of the current point cloud and o; classify the distance under a preset distance interval on a corresponding coordinate plane; and obtain the attribute feature of the current point cloud based on the quantities of points, in the current point cloud, in all the distance intervals on each of the coordinate planes.

In a possible implementation, the preset distance interval is related to a farthest distance and a closest distance among points in a point cloud collected by the to-be-positioned object.

In a possible implementation, the attribute feature includes the normal vector feature of the point cloud; all points in the current point cloud are first points; and for each first point in the current point cloud, the second processing module 1502 is specifically configured to: determine a first scan line to which the first point belongs; obtain one or more first proximal points closest to the first point on two sides of the first point that are on the first scan line; obtain one or more second proximal points closest to the first point that are on one or more second scan lines, where the second scan lines are adjacent to the first scan line; obtain a normal vector of the first point based on the first point, the one or more first proximal points, and the one or more second proximal points; and obtain the attribute feature of the current point cloud based on the normal vector of the first point.

In a possible implementation, the second processing module 1502 is specifically configured to: obtain no or one or more first vectors from the first point to the one or more first proximal points; obtain one or more second vectors from the first point to the one or more second proximal points; perform cross product calculation between two of the first vectors and the second vectors; and use an average value of all results of the cross product calculation as the normal vector of the first point.

In a possible implementation, the second processing module 1502 is specifically configured to: obtain a length of a projection of the normal vector of the first point on at least one coordinate axis; classify the length under a preset length interval; and obtain the attribute feature of the current point cloud based on quantities of first points in all length intervals.

In a possible implementation, the second processing module 1502 is specifically configured to: obtain the length of the projection of the normal vector of the first point on the coordinate axis z.

In a possible implementation, the attribute feature includes the curvature feature of the point cloud; all the points in the current point cloud are the first points; for each first point in the current point cloud, the second processing module 1502 is specifically configured to: determine a first scan line to which the first point belongs; obtain a curvature of the first point based on a location of the first point and locations of points on two sides of the first point that are on the first scan line; classify the curvature of the first point under a preset curvature interval; and obtain the attribute feature of the current point cloud based on quantities of first points in all curvature intervals.

In a possible implementation, the point cloud map includes attribute features of point clouds in a plurality of key frames; and the second processing module 1502 is specifically configured to: obtain similarities between the attribute feature of the current point cloud and the attribute features of the point clouds in all the key frames; obtain a preset quantity of highest-ranked key frames as target key frames according to a descending order of the similarities corresponding to all the key frames; use a pose corresponding to each target key frame as a candidate pose; and determine the pose of the to-be-positioned object from a plurality of candidate poses.

In a possible implementation, the second processing module 1502 is specifically configured to: convert the current point cloud into the point cloud map according to conversion relationships that correspond to the candidate poses, to obtain converted point clouds corresponding to the candidate poses; obtain, from the point cloud map, target point clouds that are closest to the converted point clouds corresponding to the candidate poses; perform iterative closest point ICP matching on the converted point clouds corresponding to the candidate poses and the corresponding target point clouds, to obtain a converted point cloud with a highest matching degree; and obtain the pose of the to-be-positioned object based on a pose corresponding to the converted point cloud with the highest matching degree and a conversion relationship obtained through the ICP matching.

In a possible implementation, the second processing module 1502 is further configured to: perform clustering for the current point cloud, to obtain a point cloud cluster of each object in the environment; delete, from the point cloud clusters of all the objects except the preset object, a point cloud cluster whose maximum z value of point clouds is less than a preset value; and extract the attribute feature of the current point cloud obtained through the deletion.

In a possible implementation, in a process in which the to-be-positioned object moves in the environment, the point cloud map construction module 1503 is configured to: collect point clouds corresponding to all poses of the to-be-positioned object; extract attribute features of the point clouds corresponding to all the poses; and store the attribute features of the point clouds corresponding to all the poses and the poses in correspondence with each other, to construct the point cloud map.

In a possible implementation, in a process in which the to-be-positioned object moves in the environment, the point cloud map construction module 1503 is configured to: collect a point cloud in one key frame at each preset distance; and obtain a pose by which the to-be-positioned object collects the point cloud in the one key frame, to obtain the point cloud corresponding to each pose.

In a possible implementation, the second processing module 1502 is further configured to: perform clustering for the point cloud corresponding to each pose, to obtain a point cloud cluster of each object in the environment; delete, from the point cloud clusters of all the objects except the preset object, a point cloud cluster whose maximum z value of point clouds is less than a preset value; and extract an attribute feature of the point cloud that corresponds to each pose and that is obtained through the deletion.

The positioning apparatus provided in this embodiment of this application may perform the actions of the to-be-positioned object in the foregoing method embodiments. An implementation principle and a technical effect of the positioning apparatus are similar. Details are not described herein again.

It should be noted that, the foregoing processing module may be implemented in a form of software invoked by a processing element, or may be implemented in a form of hardware. For example, the processing module may be a separately disposed processing element, or may be integrated into a chip of the foregoing apparatus. In addition, the processing module may be stored in a memory of the foregoing apparatus in a form of program code, and may be invoked by a processing element of the foregoing apparatus to perform a function of the foregoing processing module. In addition, all or some of the modules may be integrated together, or may be implemented independently. The processing element described herein may be an integrated circuit having a signal processing capability. In an implementation process, the steps of the foregoing methods or the foregoing modules can be implemented by using a hardware integrated logical circuit in the processing element, or by using instructions in a form of software.

For example, the foregoing modules may be configured as one or more integrated circuits for performing the foregoing methods, for example, one or more application-specific integrated circuits (application-specific integrated circuits, ASICs), one or more microprocessors (digital signal processors, DSPs), or one or more field programmable gate arrays (field programmable gate arrays, FPGAs). For another example, when one of the foregoing modules is implemented in a form of scheduling program code by a processing element, the processing element may be a general-purpose processor, like a central processing unit (central processing unit, CPU) or another processor that can invoke the program code. For another example, these modules may be integrated together, and implemented in a form of a system-on-a-chip (system-on-a-chip, SOC).

FIG. 16 is a schematic diagram of a structure of an electronic device according to an embodiment of this application. The electronic device is a robot, a vehicle, or the like that is described above. As shown in FIG. 16, the electronic device 1600 may include a processor 1601 (for example, a CPU), a memory 1602, and a point cloud collection apparatus 1603. The point cloud collection apparatus 1603 may be coupled to the processor 1601. The processor 1601 controls the point cloud collection apparatus 1603 to perform an action of emitting lasers or millimeter waves, to collect a point cloud around the electronic device, so that the electronic device is enabled to obtain the surrounding point cloud. The memory 1602 may include a high-speed random access memory (random access memory, RAM), or may further include a non-volatile memory (non-volatile memory, NVM), for example, at least one magnetic disk storage. The memory 1602 may store various instructions, to complete various processing functions and implement the method steps of this application. Optionally, the electronic device 1600 in this application may further include a power supply 1604, a communication bus 1605, and a communication port 1606. The communication port 1606 is configured to implement connection and communication between the electronic device and a peripheral component.

In this embodiment of this application, the memory 1602 is configured to store computer-executable program code. The program code includes instructions. When the processor 1601 executes the instructions, the instructions enable the processor 1601 of the electronic device to perform the actions in the foregoing method embodiments. An implementation principle and a technical effect of the processor are similar. Details are not described herein again.

Some or all of the foregoing embodiments may be implemented by using software, hardware, firmware, or any combination thereof. When software is used to implement the embodiments, some or all of the embodiments may be implemented in a form of a computer program product. The computer program product includes one or more computer instructions. When the computer program instructions are loaded and executed on a computer, some or all of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

The term "a plurality of" in this specification means two or more. The term "and/or" in this specification describes only an association relationship for describing associated objects and indicates that three relationships may exist. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that various numbers in embodiments of this application are merely used for differentiation for ease of description, and are not used to limit the scope of embodiments of this application. It should be understood that sequence numbers of the foregoing processes do not mean execution sequences in embodiments of this application. The execution sequences of the processes should be determined according to functions and internal logic of the processes, and should not be construed as any limitation the implementation processes of embodiments of this application.

**Claims**

1. A positioning method, comprising:

    collecting (S1001) a current point cloud by emitting lasers or millimeter waves around a to-be-positioned object, so that the to-be-positioned object can obtain information reflected by the lasers or the millimeter waves, wherein the current point cloud comprises a point cloud of the to-be-positioned object and a point cloud of an environment of the to-be-positioned object;

extracting (S1002) an attribute feature of the current point cloud; and

obtaining (S1006) a pose of the to-be-positioned object based on the attribute feature of the current point cloud and an attribute feature of a point cloud on a point cloud map of the environment of the to-be-positioned object, wherein the attribute feature comprises a projection feature of the point cloud, and the extracting an attribute feature comprising the projection feature of the current point cloud comprises:

projecting the current point cloud onto at least one of the following coordinate planes: an xoy plane, a yoz plane, and an xoz plane, to obtain a currently projected point cloud, wherein o is a central location of the to-be-positioned object, and x, y, and z each are a coordinate axis constructed by using o as an origin of coordinates;

obtaining a distance between each point of the currently projected point cloud and o, and classifying each distance under a preset distance interval; and

obtaining the attribute feature comprising the projection feature of the current point cloud based on quantities of points, in the current point cloud, in all distance intervals.

2. The method according to claim 1, wherein the projecting the current point cloud onto at least one of the following coordinate planes comprises:

separately projecting the current point cloud onto the xoy plane, the yoz plane, and the xoz plane, to obtain three currently projected point clouds corresponding to the current point cloud;

the obtaining a distance between each point of the currently projected point cloud and o, and classifying each distance under a preset distance interval comprises:

obtaining each distance between each of the currently projected point clouds of the current point cloud and o, and classifying the distance under a preset distance interval on a corresponding coordinate plane; and

the obtaining the attribute feature of the current point cloud based on quantities of points, in the current point cloud, in all distance intervals comprises:

obtaining the attribute feature of the current point cloud based on the quantities of points, in the current point cloud, in all the distance intervals on each of the coordinate planes.

3. The method according to claim 1 or 2, wherein the preset distance interval is related to a farthest distance and a closest distance among points in a point cloud collected by the to-be-positioned object.

4. The method according to any one of claims 1 to 4, wherein the attribute feature further comprises the normal vector feature of the point cloud, and all points in the current point cloud are first points; and

for each first point in the current point cloud, the extracting an attribute feature of the current point cloud comprises:

determining a first scan line to which the first point belongs;

obtaining one or more first proximal points closest to the first point on two sides of the first point that are on the first scan line;

obtaining one or more second proximal points closest to the first point that are on one or more second scan lines, wherein the second scan lines are adjacent to the first scan line;

obtaining a normal vector of the first point based on the first point, the one or more first proximal points, and the one or more second proximal points; and

obtaining the attribute feature of the current point cloud based on the normal vector of the first point.

5. The method according to claim 4, wherein the obtaining a normal vector of the first point based on the first point, the one or more first proximal points, and the one or more second proximal points comprises:

obtaining no or one or more first vectors from the first point to the one or more first proximal points;

obtaining one or more second vectors from the first point to the one or more second proximal points; and

performing cross product calculation between two of the first vectors and the second vectors, and using an average value of all results of the cross product calculation as the normal vector of the first point.

6. The method according to claim 4 or 5, wherein the obtaining the attribute feature of the current point cloud based on the normal vector of the first point comprises:

obtaining a length of a projection of the normal vector of the first point on at least one coordinate axis, and classifying the length under a preset length interval by dividing the length into a plurality of length intervals; and obtaining the attribute feature of the current point cloud based on quantities of first points in all length intervals, the attribute feature being a one-dimensional vector formed by the quantities of first points in all the length intervals on all the axes.

7. The method according to claim 6, wherein the obtaining a length of a projection of the normal vector of the first point on at least one coordinate axis comprises:
obtaining the length of the projection of the normal vector of the first point on the coordinate axis z.

8. The method according to any one of claims 1 to 7, wherein the attribute feature further comprises the curvature feature of the point cloud, and all the points in the current point cloud are the first points;
for each first point in the current point cloud, the extracting an attribute feature of the current point cloud comprises:

determining a first scan line to which the first point belongs;
obtaining a curvature of the first point based on a location of the first point and locations of points on two sides of the first point that are on the first scan line;
classifying the curvature of the first point under a preset curvature interval; and
obtaining the attribute feature of the current point cloud based on quantities of first points in all curvature intervals.

9. The method according to any one of claims 1 to 8, wherein the point cloud map comprises attribute features of point clouds in a plurality of key frames, and the obtaining a pose of the to-be-positioned object based on the attribute feature of the current point cloud and an attribute feature of a point cloud on a point cloud map of the environment of the to-be-positioned object comprises:

obtaining similarities between the attribute feature of the current point cloud and the attribute features of the point clouds in all the key frames;
obtaining a preset quantity of highest-ranked key frames as target key frames according to a descending order of the similarities corresponding to all the key frames;
using a pose corresponding to each target key frame as a candidate pose; and
determining the pose of the to-be-positioned object from a plurality of candidate poses.

10. The method according to claim 9, wherein the determining the pose of the to-be-positioned object from the plurality of candidate poses comprises:

converting the current point cloud into the point cloud map according to conversion relationships that correspond to the candidate poses, to obtain converted point clouds corresponding to the candidate poses;
obtaining, from the point cloud map, target point clouds that are closest to the converted point clouds corresponding to the candidate poses;
performing iterative closest point ,ICP, matching on the converted point clouds corresponding to the candidate poses and the corresponding target point clouds, to obtain a converted point cloud with a highest matching degree; and
obtaining the pose of the to-be-positioned object based on a pose corresponding to the converted point cloud with the highest matching degree and a conversion relationship obtained through the ICP matching.

11. An electronic device (1600), comprising a memory (1602), a processor (1601), and a point cloud collection apparatus (1603), wherein

the processor is configured to couple to the memory, and read and execute instructions in the memory, to implement the method according to any one of claims 1 to 10; and
the point cloud collection apparatus is configured to collect a point cloud around a to-be-positioned object.

12. A computer-readable storage medium, wherein the computer storage medium stores computer instructions, and when the computer
instructions are executed by a computer, the computer is enabled to perform the method according to any one of claims 1 to 10.

**Patentansprüche**

1. Positionierungsverfahren, umfassend:

   Erfassen (S1001) einer aktuellen Punktwolke durch Emittieren von Lasern oder Millimeterwellen um ein zu positionierendes Objekt herum, sodass das zu positionierende Objekt durch die Laser oder die Millimeterwellen reflektierte Informationen ermitteln kann,
   wobei die aktuelle Punktwolke eine Punktwolke des zu positionierenden Objekts und eine Punktwolke einer Umgebung des zu positionierenden Objekts umfasst;
   Extrahieren (S1002) eines Attributmerkmals der aktuellen Punktwolke; und
   Ermitteln (S1006) einer Haltung des zu positionierenden Objekts basierend auf dem Attributmerkmal der aktuellen Punktwolke und einem Attributmerkmal einer Punktwolke auf einer Punktwolkenkarte der Umgebung des zu positionierenden Objekts,
   wobei das Attributmerkmal ein Projektionsmerkmal der Punktwolke umfasst und das Extrahieren eines Attributmerkmals, welches das Projektionsmerkmal der aktuellen Punktwolke umfasst, Folgendes umfasst:

   Projizieren der aktuellen Punktwolke auf mindestens eine der folgenden Koordinatenebenen: eine xoy-Ebene, eine yoz-Ebene und eine xoz-Ebene, um eine aktuell projizierte Punktwolke zu ermitteln, wobei o eine zentrale Position des zu positionierenden Objekts ist, und x, y und z jeweils eine Koordinatenachse sind, die unter Verwendung von o als Koordinatenursprung konstruiert wird;
   Ermitteln eines Abstands zwischen jedem Punkt der aktuell projizierten Punktwolke und o sowie Klassifizieren jedes Abstands unter einem voreingestellten Abstandsintervall; und
   Ermitteln des Attributmerkmals, welches das Projektionsmerkmal der aktuellen Punktwolke basierend auf Punktmengen in der aktuellen Punktwolke in allen Abstandsintervallen umfasst.

2. Verfahren nach Anspruch 1, wobei das Projizieren der aktuellen Punktwolke auf mindestens eine der folgenden Koordinatenebenen Folgendes umfasst:

   separates Projizieren der aktuellen Punktwolke auf die xoy-Ebene, die yoz-Ebene und die xoz-Ebene, um drei aktuell projizierte Punktwolken entsprechend der aktuellen Punktwolke zu ermitteln;
   das Ermitteln eines Abstands zwischen jedem Punkt der aktuell projizierten Punktwolke und o sowie Klassifizieren jedes Abstands unter einem voreingestellten Abstandsintervall Folgendes umfasst:

   Ermitteln jedes Abstands zwischen jeder der aktuell projizierten Punktwolken der aktuellen Punktwolke und o sowie Klassifizieren des Abstands unter einem voreingestellten Abstandsintervall auf einer entsprechenden Koordinatenebene; und
   das Ermitteln des Attributmerkmals der aktuellen Punktwolke basierend auf Punktmengen in der aktuellen Punktwolke in allen Abstandsintervallen Folgendes umfasst:
   Ermitteln des Attributmerkmals der aktuellen Punktwolke basierend auf den Punktmengen in der aktuellen Punktwolke in allen Abstandsintervallen auf jeder der Koordinatenebenen.

3. Verfahren nach Anspruch 1 oder 2, wobei das voreingestellte Abstandsintervall auf einen größten Abstand und einen kürzesten Abstand unter Punkten in einer Punktwolke betrifft, die durch das zu positionierende Objekt erfasst wird.

4. Verfahren nach einem der Ansprüche 1 bis 4, wobei das Attributmerkmal ferner das normale Vektormerkmal der Punktwolke umfasst, und alle Punkte in der aktuellen Punktwolke erste Punkte sind; und
   das Extrahieren eines Attributmerkmals der aktuellen Punktwolke für jeden ersten Punkt in der aktuellen Punktwolke Folgendes umfasst:

   Bestimmen einer ersten Abtastlinie, zu welcher der erste Punkt gehört;
   Ermitteln eines oder mehrerer erster proximaler Punkte, die dem ersten Punkt auf zwei Seiten des ersten Punkts, die auf der ersten Abtastlinie liegen, am nächsten liegen;
   Ermitteln eines oder mehrerer zweiter proximaler Punkte, die dem ersten Punkt am nächsten liegen und die auf einer oder mehreren zweiten Abtastlinien liegen, wobei die zweiten Abtastlinien mit der ersten Abtastlinie benachbart sind;
   Ermitteln eines normalen Vektors des ersten Punkts basierend auf dem ersten Punkt, dem einen oder den mehreren ersten proximalen Punkten und dem einen oder den mehreren zweiten proximalen Punkten; und
   Ermitteln des Attributmerkmals der aktuellen Punktwolke basierend auf dem normalen Vektor des ersten Punkts.

5. Verfahren nach Anspruch 4, wobei das Ermitteln eines normalen Vektors des ersten Punkts basierend auf dem ersten Punkt, dem einen oder den mehreren ersten proximalen Punkten und dem einen oder den mehreren zweiten proximalen Punkten Folgendes umfasst:

Ermitteln keines oder eines oder mehrerer erster Vektoren von dem ersten Punkt zu dem einen oder den mehreren ersten proximalen Punkten;
Ermitteln eines oder mehrerer zweiter Vektoren von dem ersten Punkt zu dem einen oder den mehreren zweiten proximalen Punkten; und
Durchführen einer Kreuzproduktberechnung zwischen zwei der ersten Vektoren und der zweiten Vektoren sowie Verwenden eines Durchschnittswerts aller Ergebnisse der Kreuzproduktberechnung als normalen Vektor des ersten Punkts.

6. Verfahren nach Anspruch 4 oder 5, wobei das Ermitteln des Attributmerkmals der aktuellen Punktwolke basierend auf dem normalen Vektor des ersten Punkts Folgendes umfasst:

Ermitteln einer Länge einer Projektion des normalen Vektors des ersten Punkts auf mindestens einer Koordinatenachse und Klassifizieren der Länge unter einem vordefinierten Längenintervall durch Unterteilen der Länge in eine Vielzahl von Längenintervallen; und
Ermitteln des Attributmerkmals der aktuellen Punktwolke basierend auf Mengen erster Punkte in allen Längenintervallen,
wobei das Attributmerkmal ein eindimensionaler Vektor ist, der durch die Mengen erster Punkte in allen Längenintervallen auf allen Achsen ausgebildet wird.

7. Verfahren nach Anspruch 6, wobei das Ermitteln einer Länge einer Projektion des normalen Vektors des ersten Punkts auf mindestens eine Koordinatenachse Folgendes umfasst:
Ermitteln der Länge der Projektion des normalen Vektors des ersten Punkts auf der Koordinatenachse z.

8. Verfahren nach einem der Ansprüche 1 bis 7, wobei das Attributmerkmal ferner das Krümmungsmerkmal der Punktwolke umfasst, und alle Punkte in der aktuellen Punktwolke die ersten Punkte sind;
das Extrahieren eines Attributmerkmals der aktuellen Punktwolke für jeden ersten Punkt in der aktuellen Punktwolke Folgendes umfasst:

Bestimmen einer ersten Abtastlinie, zu welcher der erste Punkt gehört;
Ermitteln einer Krümmung des ersten Punkts basierend auf einer Position des ersten Punkts und Positionen von Punkten auf zwei Seiten des ersten Punkts, die auf der ersten Abtastlinie liegen;
Klassifizieren der Krümmung des ersten Punkts unter einem voreingestellten Krümmungsintervall; und
Ermitteln des Attributmerkmals der aktuellen Punktwolke basierend auf Mengen erster Punkte in allen Krümmungsintervallen.

9. Verfahren nach einem der Ansprüche 1 bis 8, wobei die Punktwolkenkarte Attributmerkmale von Punktwolken in einer Vielzahl von Schlüsselbildern umfasst, und das Ermitteln einer Haltung des zu positionierenden Objekts basierend auf dem Attributmerkmal der aktuellen Punktwolke und einem Attributmerkmal einer Punktwolke auf einer Punktwolkenkarte der Umgebung des zu positionierenden Objekts Folgendes umfasst:

Ermitteln von Ähnlichkeiten zwischen dem Attributmerkmal der aktuellen Punktwolke und den Attributmerkmalen der Punktwolken in allen Schlüsselbildern;
Ermitteln einer vordefinierten Menge von Schlüsselbildern mit höchstem Rang als Zielschlüsselbilder gemäß einer absteigenden Reihenfolge der Ähnlichkeiten entsprechend allen Schlüsselbildern;
Verwenden einer Haltung entsprechend jedem Zielschlüsselbild als Kandidatenhaltung; und
Bestimmen der Haltung des zu positionierenden Objekts aus einer Vielzahl von Kandidatenhaltungen.

10. Verfahren nach Anspruch 9, wobei das Bestimmen der Haltung des zu positionierenden Objekts aus der Vielzahl von Kandidatenhaltungen Folgendes umfasst:

Umwandeln der aktuellen Punktwolke in die Punktwolkenkarte gemäß den Umwandlungsbeziehungen, die den Kandidatenhaltungen entsprechen, um umgewandelte Punktwolken entsprechend den Kandidatenhaltungen zu ermitteln;
Ermitteln von Zielpunktwolken aus der Punktwolkenkarte, die den umgewandelten Punktwolken entsprechend den Kandidatenhaltungen am nächsten liegen;

Durchführen eines iterativen Abgleichs der nächstgelegenen Punkte, ICP-Abgleich, an den umgewandelten Punktwolken entsprechend den Kandidatenhaltungen und den entsprechenden Zielpunktwolken, um eine umgewandelte Punktwolke mit dem höchsten Abgleichsgrad zu ermitteln; und

Ermitteln der Haltung des zu positionierenden Objekts basierend auf einer Haltung entsprechend der umgewandelten Punktwolke mit dem höchsten Abgleichsgrad und einer Umwandlungsbeziehung, die über den ICP-Abgleich ermittelt wird.

11. Elektronische Vorrichtung (1600), umfassend einen Speicher (1602), einen Prozessor (1601) und eine Punktwolken-Erfassungsvorrichtung (1603), wobei

der Prozessor dazu konfiguriert ist, mit dem Speicher zu koppeln sowie Anweisungen in dem Speicher zu lesen und auszuführen, um das Verfahren nach einem der Ansprüche 1 bis 10 zu implementieren; und

die Punktwolken-Erfassungsvorrichtung dazu konfiguriert ist, eine Punktwolke um ein zu positionierendes Objekt herum zu erfassen.

12. Computerlesbares Speichermedium, wobei das Computerspeichermedium Computeranweisungen speichert, und wenn die Computeranweisungen durch einen Computer ausgeführt werden, der Computer in die Lage versetzt wird, das Verfahren nach einem der Ansprüche 1 bis 10 durchzuführen.

**Revendications**

1. Procédé de positionnement, comprenant :

la collecte (S1001) d'un nuage de points actuel en émettant des lasers ou des ondes millimétriques autour d'un objet à positionner, de sorte que l'objet à positionner peut obtenir des informations réfléchies par les lasers ou les ondes millimétriques, dans lequel le nuage de points actuel comprend un nuage de points de l'objet à positionner et un nuage de points d'un environnement de l'objet à positionner ;

l'extraction (S1002) d'une caractéristique d'attribut du nuage de points actuel ; et

l'obtention (S1006) d'une pose de l'objet à positionner sur la base de la caractéristique d'attribut du nuage de points actuel et d'une caractéristique d'attribut d'un nuage de points sur une carte de nuages de points de l'environnement de l'objet à positionner,

dans lequel la caractéristique d'attribut comprend une caractéristique de projection du nuage de points, et l'extraction d'une caractéristique d'attribut comprenant la caractéristique de projection du nuage de points actuel comprend :

la projection du nuage de points actuel sur au moins l'un des plans de coordonnées suivants : un plan xoy, un plan yoz et un plan xoz, pour obtenir un nuage de points actuellement projeté, dans lequel o est un emplacement central de l'objet à positionner, et x, y et z sont chacun un axe de coordonnées construit à l'aide de o comme origine des coordonnées ;

l'obtention d'une distance entre chaque point du nuage de points actuellement projeté et o, et le classement de chaque distance selon un intervalle de distance prédéfini ; et

l'obtention de la caractéristique d'attribut comprenant la caractéristique de projection du nuage de points actuel sur la base de quantités de points, dans le nuage de points actuel, dans tous les intervalles de distance.

2. Procédé selon la revendication 1, dans lequel la projection du nuage de points actuel sur au moins un des plans de coordonnées suivants comprend :

la projection séparée du nuage de points actuel sur le plan xoy, le plan yoz et le plan xoz, pour obtenir trois nuages de points actuellement projetés correspondant au nuage de points actuel ;

l'obtention d'une distance entre chaque point du nuage de points actuellement projeté et o, et le classement de chaque distance selon un intervalle de distance prédéfini comprend :

l'obtention de chaque distance entre chacun des nuages de points actuellement projetés du nuage de points actuel et o, et le classement de la distance selon un intervalle de distance prédéfini sur un plan de coordonnées correspondant ; et

l'obtention de la caractéristique d'attribut du nuage de points actuel sur la base de quantités de points, dans le nuage de points actuel, dans tous les intervalles de distance comprend :

l'obtention de la caractéristique d'attribut du nuage de points actuel sur la base des quantités de points, dans le nuage de points actuel, dans tous les intervalles de distance sur chacun des plans de coordonnées.

3. Procédé selon la revendication 1 ou 2, dans lequel l'intervalle de distance prédéfini est lié à une distance la plus éloignée et à une distance la plus proche parmi les points dans un nuage de points collecté par l'objet à positionner.

4. Procédé selon l'une quelconque des revendications 1 à 4, dans lequel la caractéristique d'attribut comprend également la caractéristique de vecteur normal du nuage de points, et tous les points dans le nuage de points actuel sont des premiers points ; et

pour chaque premier point dans le nuage de points actuel, l'extraction d'une caractéristique d'attribut du nuage de points actuel comprend :

la détermination d'une première ligne de balayage à laquelle appartient le premier point ;

l'obtention d'un ou de plusieurs premiers points proximaux les plus proches du premier point de part et d'autre du premier point qui se trouvent sur la première ligne de balayage ;

l'obtention d'un ou de plusieurs seconds points proximaux les plus proches du premier point qui se trouvent sur une ou plusieurs secondes lignes de balayage, dans lequel les secondes lignes de balayage sont adjacentes à la première ligne de balayage ;

l'obtention d'un vecteur normal du premier point sur la base du premier point, des un ou plusieurs premiers points proximaux et des un ou plusieurs seconds points proximaux ; et

l'obtention de la caractéristique d'attribut du nuage de points actuel sur la base du vecteur normal du premier point.

5. Procédé selon la revendication 4, dans lequel l'obtention d'un vecteur normal du premier point sur la base du premier point, des un ou plusieurs premiers points proximaux et des un ou plusieurs seconds points proximaux comprend :

l'obtention d'aucun ou d'un ou de plusieurs premiers vecteurs à partir du premier point vers les un ou plusieurs premiers points proximaux ;

l'obtention d'un ou de plusieurs seconds vecteurs à partir du premier point vers les un ou plusieurs seconds points proximaux ; et

la réalisation d'un calcul de produit vectoriel entre deux des premiers vecteurs et des seconds vecteurs, et l'utilisation d'une valeur moyenne de tous les résultats du calcul de produit vectoriel comme vecteur normal du premier point.

6. Procédé selon la revendication 4 ou 5, dans lequel l'obtention de la caractéristique d'attribut du nuage de points actuel sur la base du vecteur normal du premier point comprend :

l'obtention d'une longueur d'une projection du vecteur normal du premier point sur au moins un axe de coordonnées, et le classement de la longueur selon un intervalle de longueur prédéfini en divisant la longueur en une pluralité d'intervalles de longueur ; et

l'obtention de la caractéristique d'attribut du nuage de points actuel sur la base de quantités de premiers points dans tous les intervalles de longueur, la caractéristique d'attribut étant un vecteur unidimensionnel formé par les quantités de premiers points dans tous les intervalles de longueur sur tous les axes.

7. Procédé selon la revendication 6, dans lequel l'obtention d'une longueur d'une projection du vecteur normal du premier point sur au moins un axe de coordonnées comprend :

l'obtention de la longueur de la projection du vecteur normal du premier point sur l'axe de coordonnées z.

8. Procédé selon l'une quelconque des revendications 1 à 7, dans lequel la caractéristique d'attribut comprend également la caractéristique de courbure du nuage de points, et tous les points dans le nuage de points actuel sont les premiers points ; pour chaque premier point dans le nuage de points actuel, l'extraction d'une caractéristique d'attribut du nuage de points actuel comprend :

la détermination d'une première ligne de balayage à laquelle appartient le premier point ;

l'obtention d'une courbure du premier point sur la base d'un emplacement du premier point et d'emplacements de points de part et d'autre du premier point qui se trouvent sur la première ligne de balayage ;

le classement de la courbure du premier point selon un intervalle de courbure prédéfini ; et

l'obtention de la caractéristique d'attribut du nuage de points actuel sur la base de quantités de premiers points dans tous les intervalles de courbure.

9. Procédé selon l'une quelconque des revendications 1 à 8, dans lequel la carte de nuages de points comprend des caractéristiques d'attribut de nuages de points dans une pluralité d'images clés, et l'obtention d'une pose de l'objet à positionner sur la base de la caractéristique d'attribut du nuage de points actuel et d'une caractéristique d'attribut d'un nuage de points sur une carte de nuages de points de l'environnement de l'objet à positionner comprend :

l'obtention de similarités entre la caractéristique d'attribut du nuage de points actuel et les caractéristiques d'attribut des nuages de points dans toutes les images clés ;

l'obtention d'une quantité prédéfinie d'images clés les mieux classées en tant qu'images clés cibles selon un ordre décroissant des similarités correspondant à toutes les images clés ;

l'utilisation d'une pose correspondant à chaque image clé cible en tant que pose candidate ; et

la détermination de la pose de l'objet à positionner à partir d'une pluralité de poses candidates.

10. Procédé selon la revendication 9, dans lequel la détermination de la pose de l'objet à positionner à partir de la pluralité de poses candidates comprend :

la conversion du nuage de points actuel en carte de nuages de points selon des relations de conversion qui correspondent aux poses candidates, pour obtenir des nuages de points convertis correspondant aux poses candidates ;

l'obtention, à partir de la carte de nuages de points, de nuages de points cibles qui sont les plus proches des nuages de points convertis correspondant aux poses candidates ;

la réalisation d'une mise en correspondance itérative des points les plus proches, ICP, sur les nuages de points convertis correspondant aux poses candidates et aux nuages de points cibles correspondants, pour obtenir un nuage de points converti avec un degré de correspondance le plus élevé ; et

l'obtention de la pose de l'objet à positionner sur la base d'une pose correspondant au nuage de points converti avec le degré de correspondance le plus élevé et d'une relation de conversion obtenue à travers la mise en correspondance ICP.

11. Dispositif électronique (1600), comprenant une mémoire (1602), un processeur (1601) et un appareil de collecte de nuages de points (1603), dans lequel

le processeur est configuré pour se coupler à la mémoire, et lire et exécuter des instructions dans la mémoire, pour mettre en œuvre le procédé selon l'une quelconque des revendications 1 à 10 ; et

l'appareil de collecte de nuages de points est configuré pour collecter un nuage de points autour d'un objet à positionner.

12. Support de stockage lisible par ordinateur, dans lequel le support de stockage informatique stocke des instructions informatiques, et lorsque les instructions informatiques

sont exécutées par un ordinateur, l'ordinateur est activé pour réaliser le procédé selon l'une quelconque des revendications 1 à 10.

```
┌─────────────────────┐              ┌─────────────────────┐
│    Image feature    │              │  Image feature map  │
└─────────────────────┘              └─────────────────────┘
           │                                    │
           │◄───────────────────────────────────┘
           ▼
┌─────────────────────┐
│ Image feature matching│
└─────────────────────┘
           │
           ▼
┌─────────────────────┐              ┌─────────────────────┐
│    Initial pose     │              │   Laser point cloud  │
└─────────────────────┘              └─────────────────────┘
           │                                    │
           │◄───────────────────────────────────┘
           ▼
┌─────────────────────┐
│  Particle filtering │
└─────────────────────┘
           │
           ▼
┌─────────────────────┐
│        Pose         │
└─────────────────────┘
```

FIG. 1

```
┌─────────────────────────┐          ┌─────────────────────────┐
│      Point cloud        │          │     Point cloud map     │
└─────────────────────────┘          └─────────────────────────┘
             │                                    │
             │◄───────────────────────────────────┘
             ▼
┌─────────────────────────┐
│  Point cloud ICP matching │
└─────────────────────────┘
             │
             ▼
┌─────────────────────────┐
│          Pose           │
└─────────────────────────┘
```

FIG. 2

┌──────────────────────────────────────────────────────────────────┐
│ Collect a current point cloud, where the current point cloud includes a point cloud │   S301
│ of a to-be-positioned object and a point cloud of an environment of the to-be- │
│                        positioned object                         │
└──────────────────────────────────────────────────────────────────┘
                                 │
                                 ▼
┌──────────────────────────────────────────────────────────────────┐
│                                                                  │   S302
│        Extract an attribute feature of the current point cloud          │
│                                                                  │
└──────────────────────────────────────────────────────────────────┘
                                 │
                                 ▼
┌──────────────────────────────────────────────────────────────────┐
│ Obtain a pose of the to-be-positioned object based on the attribute feature of the │   S303
│ current point cloud and an attribute feature of a point cloud on a point cloud map │
│            of the environment of the to-be-positioned object            │
└──────────────────────────────────────────────────────────────────┘

FIG. 3

Collect a current point cloud, where the current point cloud includes a point cloud of a to-be-positioned object and a point cloud of an environment of the to-be-positioned object

S301

Project the current point cloud onto at least one of the following coordinate planes: an xoy plane, a yoz plane, and an xoz plane, to obtain a currently projected point cloud, where o is a central location of the to-be-positioned object, and x, y, and z each are a coordinate axis constructed by using o as an origin of coordinates

S401

Obtain a distance between the currently projected point cloud and o, and classify the distance under a preset distance interval

S402

Obtain an attribute feature of the current point cloud based on quantities of points, in the current point cloud, in all distance intervals

S403

Obtain a pose of the to-be-positioned object based on the attribute feature of the current point cloud and an attribute feature of a point cloud on a point cloud map of the environment of the to-be-positioned object

S303

FIG. 4

FIG. 5

Collect a current point cloud, where the current point cloud includes a point cloud of a to-be-positioned object and a point cloud of an environment of the to-be-positioned object    S301

Determine a first scan line to which a first point belongs, where all points in the current point cloud are the first points    S601

Obtain one or more first proximal points closest to the first point on two sides of the first point that are on the first scan line    S602

Obtain one or more second proximal points closest to the first point that are on one or more second scan lines, where the second scan lines are adjacent to the first scan line    S603

Obtain a normal vector of the first point based on the first point, the one or more first proximal points, and the one or more second proximal points    S604

Obtain an attribute feature of the current point cloud based on the normal vector of the first point    S605

Obtain a pose of the to-be-positioned object based on the attribute feature of the current point cloud and an attribute feature of a point cloud on a point cloud map of the environment of the to-be-positioned object    S303

FIG. 6

FIG. 7

Collect a current point cloud, where the current point cloud includes a point cloud of a to-be-positioned object and a point cloud of an environment of the to-be-positioned object

S301

Determine a first scan line to which a first point belongs

S801

Obtain a curvature of the first point based on a location of the first point and locations of points on two sides of the first point that are on the first scan line

S802

Classify the curvature of the first point under a preset curvature interval

S803

Obtain an attribute feature of the current point cloud based on quantities of first points in all curvature intervals

S804

Obtain a pose of the to-be-positioned object based on the attribute feature of the current point cloud and an attribute feature of a point cloud on a point cloud map of the environment of the to-be-positioned object

S303

FIG. 8

FIG. 9

Collect a current point cloud, where the current point cloud includes a point cloud of a to-be-positioned object and a point cloud of an environment of the to-be-positioned object    S1001

Extract an attribute feature of the current point cloud    S1002

Obtain similarities between the attribute feature of the current point cloud and attribute features of point clouds in all key frames    S1003

Obtain a preset quantity of highest-ranked key frames as target key frames according to a descending order of the similarities corresponding to all the key frames    S1004

Use a pose corresponding to each target key frame as a candidate pose    S1005

Determine a pose of the to-be-positioned object from a plurality of candidate poses    S1006

FIG. 10

A to-be-positioned object collects, in a process of moving in an environment, point clouds corresponding to all poses of the to-be-positioned object

S1101

Extract attribute features of the point clouds corresponding to all the poses

S1102

Store the attribute features of the point clouds corresponding to all the poses and the poses in correspondence with each other, to construct a point cloud map

S1103

FIG. 11

A to-be-positioned object collects, in a process of moving in an environment, point clouds corresponding to all poses of the to-be-positioned object — S1101

Perform filtering on the point cloud corresponding to each pose — S1104

Perform clustering for the point cloud corresponding to each pose, to obtain a point cloud cluster of each object in the environment — S1105

Delete, from the point cloud clusters of all the objects, a point cloud cluster whose maximum z value of point clouds is less than a preset value — S1106

Extract attribute features of the point clouds corresponding to all the poses — S1102

Store the attribute features of the point clouds corresponding to all the poses and the poses in correspondence with each other, to construct the point cloud map — S1103

FIG. 12

FIG. 13

Collect a current point cloud, where the current point cloud includes a point cloud of a to-be-positioned object and a point cloud of an environment of the to-be-positioned object — S1001

Perform filtering on the current point cloud — S1007

Perform clustering for the current point cloud, to obtain a point cloud cluster of each object in the environment — S1008

Delete, from the point cloud clusters of all the objects, a point cloud cluster whose maximum z value of point clouds is less than a preset value — S1009

Extract an attribute feature of the current point cloud — S1002

Obtain similarities between the attribute feature of the current point cloud and attribute features of point clouds in all key frames — S1003

Obtain a preset quantity of highest-ranked key frames as target key frames according to a descending order of the similarities corresponding to all the key frames — S1004

Use a pose corresponding to each target key frame as a candidate pose — S1005

Determine a pose of the to-be-positioned object from a plurality of candidate poses — S1006

FIG. 14

1500

| 1501 | 1502 | 1503 |
|------|------|------|
| First processing module | Second processing module | Point cloud map construction module |

FIG. 15

1601    1604

Electronic device

Processor    Power supply

1602

1605

Memory

Point cloud collection apparatus    Communication port

1603    1606

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018247122 A1
- CN 109974707 A
- CN 111627114 A
- US 2018329617 A1

### Non-patent literature cited in the description

- Multimodal detection and tracking of pedestrians in urban environments with explicit ground plane extraction. **SPINELLO L et al.** INTELLIGENT ROBOTS AND SYSTEMS, 2008. IROS 2008. IEEE
- RSJ INTERNATIONAL CONFERENCE ON. IEEE, 22 September 2008, 1823-1829
- **WANG XI et al.** Rigid 3D Point Cloud Registration Based on Point Feature Histograms. *Proceedings of the 2017 2nd International Conference on Machinery, Electronics and Control Simulation (MECS 2017)*, 01 January 2017, 543-550
- An improved similarity measure algorithm based on point feature histogram. **YU XIAOQING et al.** 2014 INTERNATIONAL CONFERENCE ON AUDIO, LANGUAGE AND IMAGE PROCESSING. IEEE, 07 July 2014, 396-400